# EUROPEAN PATENT APPLICATION

(11) **EP 1 880 828 A1**
(43) Date of publication of application: **23.01.2008**
(21) Application number: 06746217.6
(22) Date of filing: 10.05.2006
(51) Int. Cl.: B29C 51/14, B29C 51/08, B29C 51/10

(54) **PROCESS FOR FORMING THERMOFORMABLE SHEET AND FORMING MACHINE**

(30) Priority: 10.05.2005 JP 2005137495
(71) Applicant: Dainippon Ink and Chemicals, Incorporated, Itabashi-ku Tokyo 174-8520 (JP)
(72) Inventor: SAWADA, Hidetsugu Dainippon Ink & Chemicals, Inc., Sakura-shi, Chiba 2858668 (JP); OHYA, Satoshi Dainippon Ink & Chemicals, Inc., Sakura-shi, Chiba 2858668 (JP); ARAI, Kousuke Dainippon Ink & Chemicals, Inc., Sakura-shi, Chiba 2858668 (JP); KUDO, Kouichi c/o Yamazaki Mold Co., Ltd., Kawasaki-shi, Kanagawa 2100858 (JP); KUDO, Keisuke c/o Yamazaki Mold Co., Ltd., Kawasaki-shi, Kanagawa 2100858 (JP)
(74) Representative: Albrecht, Thomas
(86) International application number: PCT/JP2006/309403
(87) International publication number: WO 2006/121079

(57) **Abstract**

The thermoforming method of the present invention is a method that includes thermoplasticizing a portion, including a part 2 which is molded with molds, of a thermoforming sheet 1 in which at least one or more thermoplastic resin layers (A) and a decorative layer (B) were laminated, at a temperature range of (Tg (A) - 30)°C to (Tg (A) + 10)°C with respect to the glass transition temperature (Tg (A)) of the thermoplastic resin layer (A); subsequently clamping by using a pair of frame clamps 14 and 24 both sides of a perimeter around the portion 2, which is molded with the molds, of the sheet 1; expanding the thermoplasticized portion between one mold and the frame clamps by pressing a portion of the one mold 20 onto one surface of the thermoplasticized portion; subsequently bringing the other mold 10 into contact with the thermoplasticized portion from the side opposite to the surace of the thermoplasticized porition that the one mold is in contact with; and mold-clamping the thermoplasticized portion with the one mold 10 and the other mold 20 to mold the thermoforming sheet. According to the present invention, forming at a low temperature in which the design properties can not be adversely affected can be achieved, and formed articles in which wrinkles or the like are not generated can be obtained.

## Description

### TECHNICAL FIELD

The present invention relates to a thermoforming method and a thermoforming apparatus that is applied to thermoforming a laminate sheet having a decorative layer (for example, a laminate sheet for thermoforming which has excellent brilliance of the decoration, and which is useful as automobile parts, building components, parts for home electronics or the like since it does not require the outermost layer to be painted). In particular, the present invention relates to a thermoforming method and a thermoforming apparatus that is applied to thermoforming a laminate sheet for thermoforming having a metallic design or a printed-like design.

### BACKGROUND ART

In general, when a colored resin-formed article is produced, a method wherein a pigment is mixed into the resin, and the colored resin is subjected to the injection-molding, or a method wherein the formed product is subjected to spray coating can be mentioned. For example, when a metallic design is required, the coating method is more frequently applied than the coloring method since it is difficult to mix a metallic pigment therein, and flow-like patterns of the pigment are conspicuously formed therein. In the case of the coating method, if a coating film is printed and its polymer content is cross-linked, this is expected to achieve an effect of surface protection. Also, in recent years, in order to protect the workshop or the outside environment from the emission of volatile organic solvents, a solvent-free strategy has been attempted by using water-based or powder coatings instead of coatings which use volatile organic solvents. However, it is still difficult to express a metallic design by way of using such a solvent-free coating method.

On the other hand, the coloring method or the coating method cannot be applied as a method for creating a complex printed-like design or the like on the surface of the formed product.

To solve the problem, a method is known wherein a colored sheet obtained by laminating formable support resin layers is subjected to forming by way of integrating it with a resin formed product during the injection-molding. According to this method, a resin-formed material having a metallic or printed-like design can be produced without using solvents.

Examples of a conventional forming method for thermoforming sheets include the vacuum forming method wherein a thermoforming sheet and molds are subjected to a vacuum condition and forming is conducted after the sheet is sufficiently heat-plasticized; the pressure forming method wherein the sheet is formed by way of pressing it onto the mold using air-pressure; the press forming (matched mold forming) wherein the sheet is formed by way of holding it between male and female molds. The press forming method can achieve excellent reproducibility of the shape because the method is a mechanical forming method. However, there has been a problem in which the sheet is drawn into molds during forming whereby the sheet is easily wrinkled, and the expansion of the sheet is not uniform whereby a thickness deviation is present in the obtained formed product.

To prevent such excessive expansion of the thermoforming sheet and to alleviate the generation of wrinkles by way of regulating the thickness of the sheet, for example, a method in which a thermoplastic foamed resin sheet that is plasticized is sandwiched and clamped with upper and down point-clams at minimum pressure at boundary portions of the multiple male and female molds, and then, forming is conducted by way of matching male and female molds (See Patent Document 1); or a method in which the marginal portion of the resin sheet is held between upper and down holding plates while making a gap between the holding plates slightly broader than the thickness of the resin sheet; the marginal portion of the resin sheet is then released from the sheet clamper; the plug is moved downward whereby the resin sheet is pushed downward while the marginal portion of the resin sheet slides from the gap between the upper and down holding plates; the marginal portion of the resin sheet is then fixed with the upper and down holding plates; and, after the upper and down holding plates are moved downward while fixing the resin sheet, vacuum and/or pressure forming is conducted (See, for example Patent Document 2) is known.

All of the above-mentioned methods are useful when forming is conducted after the thermoforming sheet is sufficiently plasticized or softened. The term "sufficiently plasticized or softened" specifically refers to the state after the held thermoforming sheet is heated to the extent that the sheet is drawn down, and the state after the heat is sufficiently applied thereto at 20°C or more greater than the glass transition temperature of the resin used in the thermoforming sheet.

However, the above-mentioned methods cannot be applied to forming sheets that cannot be treated at high temperature. For example, a laminate sheet including an ink film in which metal flakes are dispersed in a binding resin varnish, and whose spreadability is excellent during thermoforming has been known as a sheet having a metallic design which has high brilliance (See, for example , Patent Document 3). If such sheet is heated at high temperature, then, its brilliance is deteriorated. Moreover, a laminate sheet having a printed-like design uses pigments in a printing layer, and therefore, color deterioration or the like will occur according to high temperature treatment whereby color heterogeneity or color change is often present in the resulting formed article. Furthermore, with regard to a complex design, excessive expansion of the thermoforming sheet causes deformation of the pattern.

In the above-mentioned methods, if forming is conducted at low temperature (for example, at a temperature around the Tg of the resin used in thermoforming sheet), the design properties can be maintained, but it is difficult to conduct thermoforming at such a temperature. For example, in the method disclosed by Patent Document 1, excessive force is applied to the boundary between the clamped portion and the non-clamped portion whereby the sheet is broken, or wrinkles are often present in the resulting formed article because the sheet is drawn inward. On the other hand, the sheet is not completely fixed in the method disclosed by Patent Document 2, and therefore, the sheet does not follow the movement of the molds, and the method is inferior in reproducibility of the molded shape. This often produces defective products having wrinkles thereon (the so-called "bridge"), and a formed article having a desirable shape cannot be obtained.
Patent Document 1: JP-A-H06-226834
Patent Document 2: JP-A-H10-166436
Patent Document 3: JP-A-2002-46230

### Disclosure of the Invention

The object of the present invention is to obtain a formed article which can be formed at low temperature such that the design properties are not deteriorated, and which has no wrinkles or the like.

The present inventors discovered that the following method can solve the above-described object of the present invention, and that the method can provide a formed product which can maintain the design properties and which has excellent thermoformability. That is, the method includes: thermoplasticizing a portion of a thermoforming sheet, including a portion which is molded with molds, at a temperature around the glass transition temperature of the thermoplastic resin used in the thermoforming sheet ("glass transition temperature" refers to a temperature where the mechanical damping becomes a maximum value while the mechanical damping is measured under the measurement conditions: the frequency of 1 Hz; the measurement-starting temperature of 0°C; and the increase in rate of 3°C/minute, using the measurement method of dynamic viscoelasticity based on JIS K7244-1. Hereinafter, the glass transition temperature is abbreviated as Tg), more specifically, at a temperature range of (Tg (A) - 30)°C to (Tg (A) + 10)°C with respect to the glass transition temperature (Tg (A)) of the thermoplastic resin layer (A) (the thermoforming sheet at this point is in the state where the sheet is partially plasticized, but not fluidized, and in the state where, with regard to elasticity, the sheet is in the transition region, where the storage elastic modulus begins to slightly decrease, to a rubbery region); then expanding the thermoplasticized portion between the one mold and one pair of frame clamps by pressing at least a portion of one mold onto the thermoplasticized portion while clamping by using the one pair of frame clamps both sides of the entire perimeter around the portion which is molded with molds; subsequently bringing the other mold into contact with the thermoplasticized portion; and holding the thermoplasticized portion between the one mold and the other mold to form the thermoforming sheet.

That is, an aspect of the present invention is to provide a method of thermoforming a thermoforming sheet by holding between a pair of molds the thermoforming sheet in which at least one or more thermoplastic resin layers (A) and a decorative layer (B) are laminated, said method including: thermoplasticizing a portion of the thermoforming sheet, including a part which is molded with molds, at a temperature range of (Tg (A) - 30)°C to (Tg (A) + 10)°C with respect to the glass transition temperature (Tg (A)) of the thermoplastic resin layer (A) where the glass transition temperature (Tg) refers to a temperature where the mechanical damping becomes a maximum value when the dynamic viscoelasticity is measured under measurement conditions of: the frequency of 1 Hz; the measurement-starting temperature of 0°C; and the increasing rate of 3°C/minute, based on a method of JIS K7244-1, and where, when the thermoforming sheet includes a plurality of the thermoplastic resin layers (A), the highest temperature among the glass transition temperatures of the plurality of thermoplastic resin layers (A) is defined as the Tg (A); subsequently clamping by using a pair of frame clamps both sides of a perimeter around the portion which is molded with the molds; expanding the thermoplasticized portion between one mold and the frame clamps by pressing a portion of the one mold onto one surface of the thermoplasticized portion; subsequently bringing the other mold into contact with the thermoplasticized portion from the side opposite to the surface of the thermoplasticized porition that the one mold is in contact with; and mold-clamping the thermoplasticized portion with the one mold and the other mold to mold the thermoforming sheet.

Another aspect of the present invention is to provide a forming apparatus for a thermoforming sheet that is a apparatus that molds the sheet by bringing a pair of molds into contact with a part which is molded with molds after thermoplasticizing a portion of the thermoforming sheet, including the part which is molded with molds, at a temperature range of (Tg (A) - 30)°C to (Tg (A) + 10)°C with respect to the glass transition temperature (Tg (A)) of the thermoplastic resin layer (A) where the glass transition temperature (Tg) refers to a temperature where the mechanical damping becomes a maximum value when the dynamic viscoelasticity is measured under measurement conditions of: the frequency of 1 Hz; the measurement-starting temperature of 0°C; and the increase in rate of 3°C/minute, based on a method of JIS K7244-1, and where , when the thermoforming sheet includes a plurality of the thermoplastic resin layers (A), the highest temperature among the glass transition temperatures of the plurality of thermoplastic resin layers (A) is defined as the Tg (A), wherein frame clamps that clamp a perimeter around a portion of the sheet which is molded with the molds are provided around the molds, respectively, and the frame clamps are capable of moving relatively to the molds.

According to the forming method of the present invention, after the thermoforming sheet is thermoplasticized within a range of (Tg (A) - 30)°C to (Tg (A) + 10)°C with respect to Tg of the thermoplastic resin, the entire perimeter around the part of the thermoforming sheet which is molded with molds is clamped with frame clamps whereby the molds can be pressed onto the thermoforming sheet inside the frame clamps while tightly fixing the sheet. Accordingly, the tension of the thermoforming sheet can be appropriately adjusted (made uniform) directly before the sheet is molded, so that wrinkles generated from dragging of the sheet into the pair of molds, and deterioration of design properties owing to the ununiform expansion can be controlled. Since the temperature during the forming process can be controlled by way of selecting a suitable Tg of the thermoplastic resin used in the thermoforming sheet, the forming temperature can be appropriately set according to heat resistance, among others, of pigments and inks used in the decorative layer. Since the frame clamps are capable of moving, the tension of the sheet can be appropriately adjusted by clamping the thermoforming sheet with frame clamps after the sheet is thermoplasticized.

Since the apparatus of the present invention enables low-temperature forming, a formed article which maintains original design properties can be obtained.

### BRIEF DISCRIPTION OF THE DRAWINGS

Figure 1A is a cross section which illustrates a first embodiment (forming method A) of the forming method of the present invention, and which shows the state where the sheet is clamped with frame clamps.
Figure 1B is a cross section which illustrates the first embodiment (forming method A) of the forming method of the present invention, and which shows the state where the clamped sheet comes into contact with one mold.
Figure 1C is a cross section which illustrates the first embodiment (forming method A) of the forming method of the present invention, and which shows the state where the clamped sheet is mold-clamped with both molds.
Figure 2A is a cross section which illustrates the first embodiment (forming method B) of the forming method of the present invention, and which shows the state where the sheet is clamped with frame clamps.
Figure 2B is a cross section which illustrates the first embodiment (forming method B) of the forming method of the present invention, and which shows the state where the clamped sheet comes into contact with one mold.
Figure 2C is a cross section which illustrates the first embodiment (forming method B) of the forming method of the present invention, and which shows the state where the clamped sheet is mold-clamped with both molds.
Figure 3A is a cross section which illustrates a second embodiment of the forming method of the present invention, and which shows the state where the sheet is clamped with frame clamps.
Figure 3B is a cross section which illustrates the second embodiment of the forming method of the present invention, and which shows the state where the clamped sheet comes into contact with one mold.
Figure 3C is a cross section which illustrates the second embodiment of the forming method of the present invention, and which shows the state where the clamped sheet is mold-clamped with both molds.
Figure 4A is a perspective view which illustrates one example of a male mold wherein a frame clamp is provided, and which shows the state where the frame clamp is moved downward to the mold.
Figure 4B is a perspective view which illustrates one example of a male mold wherein a frame clamp is provided, and which shows the state where the frame clamp is moved upward to the mold.
Figure 5A is a perspective view which illustrates one example of a female mold wherein a frame clamp is provided, and which shows the state where the frame clamp is moved downward to the mold.
Figure 5B is a perspective view which illustrates one example of a female mold wherein a frame clamp is provided, and which shows the state where the frame clamp is moved upward to the mold.
Figure 6A is a perspective view which illustrates another example of a female mold wherein a frame clamp is provided, and which shows the state where the frame clamp (a part of the frame clamp is cross-sectioned) is moved downward to the mold.
Figure 6B is a perspective view which illustrates another example of a female mold wherein a frame clamp is provided, and which shows the state where the frame clamp is moved upward to the mold.
Figure 7 is a schematic diagram which illustrates one example of the frame clamps having a recessed part and a projected part which fit with each other in the forming apparatus of the above first embodiment.
Figure 8 is a schematic diagram which illustrates one example of the frame clamps having a recessed part and a projected part which fit with each other in the forming apparatus of the second embodiment.
Figure 9 is a schematic diagram which illustrates another example of the frame clamps having a recessed part and a projected part which fit with each other in the forming apparatus of the second embodiment.

The reference numeral "1" indicates a thermoforming sheet; the reference numeral "2" indicates a part which is molded with molds; the reference numeral "10" indicates a male mold; the reference numeral "11" indicates a male mold body; the reference numeral "12" indicates a box; the reference numeral "13" indicates a fixing plate; the reference numeral "14" indicates a frame clamp; the reference numeral "15" indicates a clamping plane; the reference numeral "17" indicates the outer perimeter of the male mold; the reference numeral "18" indicates a vacuum port; the reference numeral "20" indicates a female mold; the reference numeral "21" indicates a female mold body; the reference numeral "22" indicates a box; the reference numeral "23" indicates a fixing plate; the reference numeral "24" indicates a frame clamp; the reference numeral "25" indicates a clamping plane; the reference numeral "27" indicates a flange; the reference numeral "31" indicates a projected part; and the reference numeral "32" indicates a recessed part.

### BEST MODE FOR CARRYING OUT THE INVENTION

Hereinafter, the present invention will be described based on the best mode with reference to Figures.

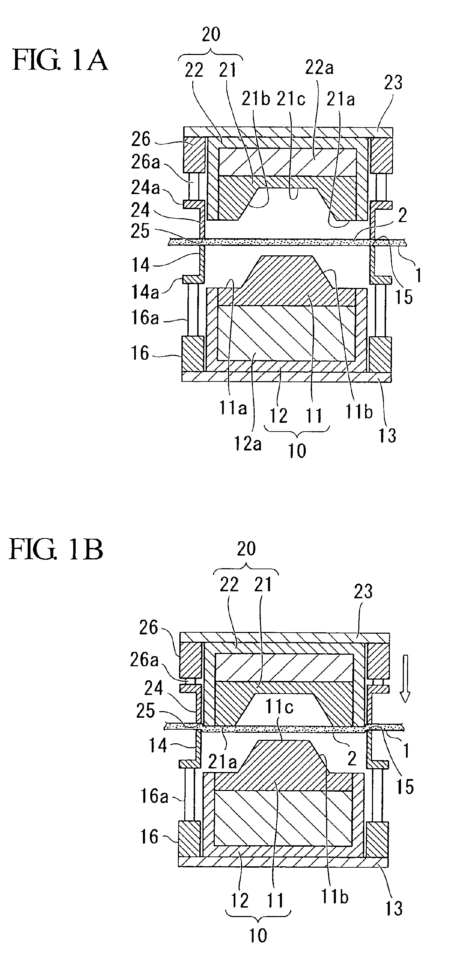

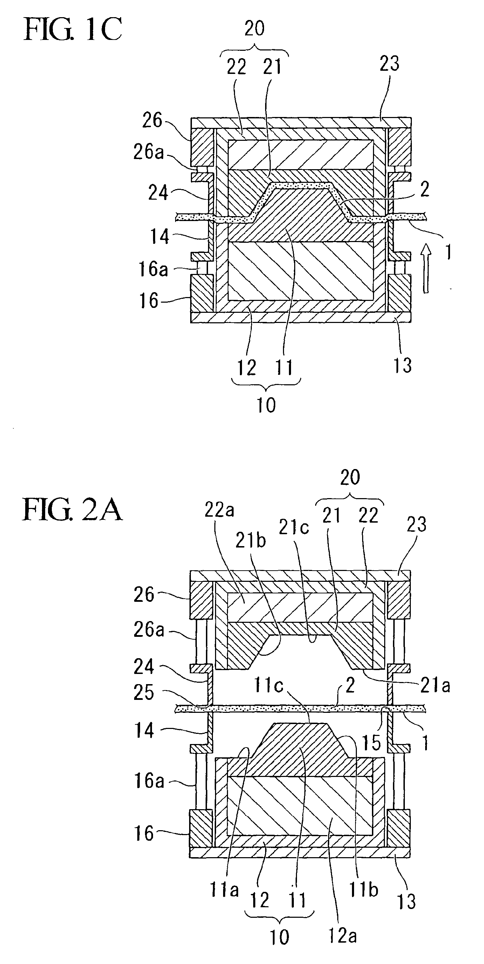

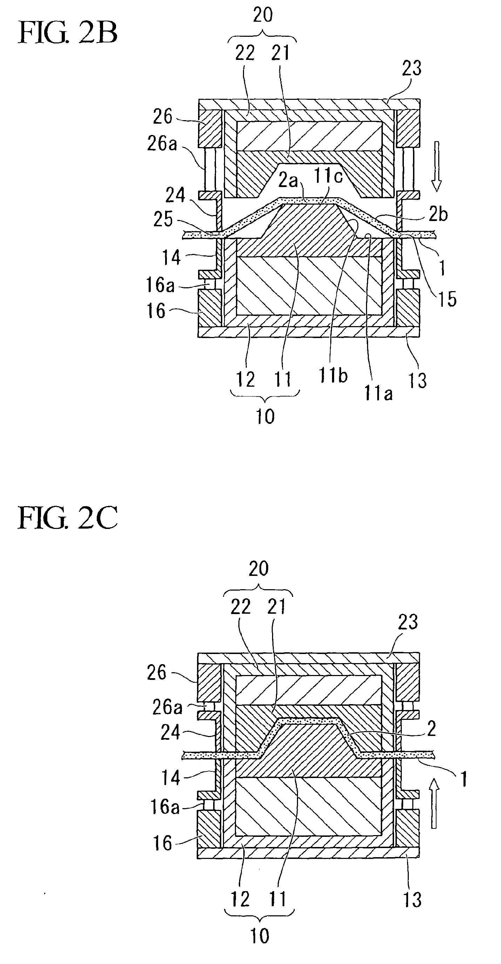

Figures 1 and 2 are cross sections that illustrate the first embodiment of the forming method and the forming apparatus of the present invention. In Figures 1 and 2, the forming method is different, but an identical forming apparatus is utilized.

In Figures 1 and 2, reference number 1 shows a thermoforming sheet. The forming apparatus used in the present invention is equipped with a male mold 10 and a female mold 20 as molds for matched-mold forming; fixing plates 13 and 23 on which the molds 10 and 20 are respectively fixed; a pair of frame clamps 14 and 24 that clamp both sides of the entire perimeter around the part 2 of the thermoforming sheet 1 which is molded with the molds; and cylinders 16 and 26 as driving devices that drive the frame clamps with respect to the molds.

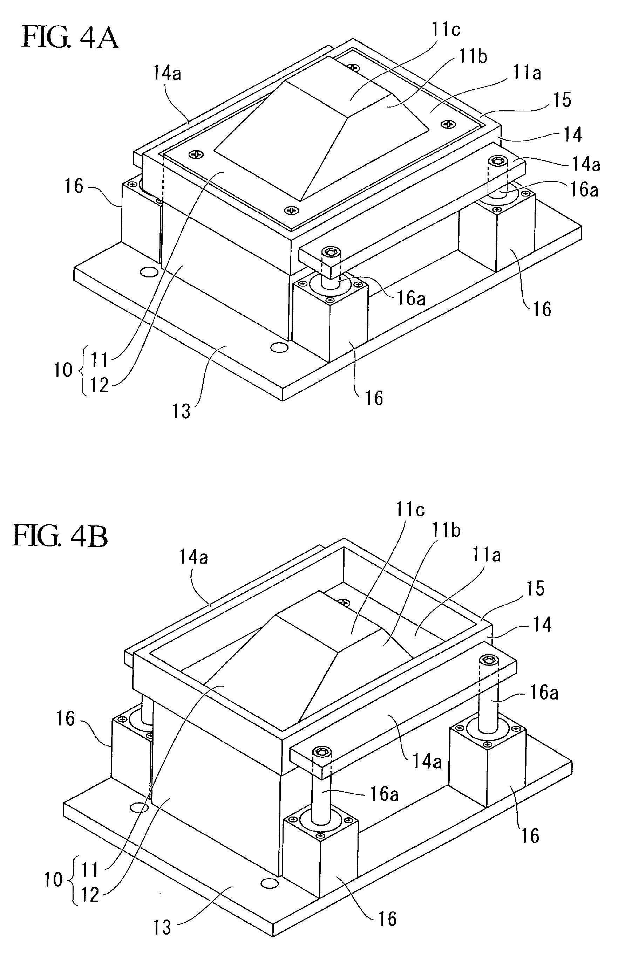

As shown in Figure 4, the male mold 10 is equipped with a male mold body 11 that comes into contact with the thermoforming sheet 1 and that forms the shape of the hollowed side of the formed article; and a box 12 in which the male mold body 11 is installed. A block 12a is installed between the backside of the male mold body 11 and the bottom of the box 12 to occupy the space thereof (See Figures 1 and 2), and the box 12 is fixed on the fixing plate 13. The male mold body 11 has a horizontal plane 11a that is provided on the peripheral area; an top plane 11c that is provided in the central portion of the male mold body 11; and a inclined plane 11b that stretches between the horizontal plane 11a and the top plane 11c, and the inclined plane 11b and the top plane 11c is present above the level of the horizontal plane 11a. A flow channel of the medium such as water or oil is provided inside the male mold 10 in order to control the temperature of the mold (not shown in Figures), and the male mold 10 can be connected to a device for controlling the temperature of the mold via the flow channel. However, the method of controlling the temperature of the mold is not particularly limited, and other methods can be applied in addition to the above-described method. An air vent port or a vacuum port (not shown in Figures) may be provided in the junctional region between the horizontal plane 11a and the inclined plane 11b of the male mold 10 if necessary. It is preferable that these ports be as small as possible lest the formed product is marked by the ports. The diameter of the port is preferably within a range of 0.3 mm to 1.2 mm, more preferably within a range of 0.3 mm to 0.6 mm.

A frame clamp 14 is provided around the male mold 10. A pair of projected parts 14a is formed at both sides of the frame clamp 14, the projected parts 14a extend outward, and the top of a driving shaft (rod) 16a of the cylinder 16 is fixed to the projected part 14. According to this configuration, the frame clamp 14 can move relatively to the male mold 10. Figure 4A shows the state where the frame clamp 14 is moved downward to the male mold 10 while Figure 4B shows the state where the frame clamp 14 is moved upward to the male mold 10. The cylinder 16 that actuates the frame clamp 14 is fixed onto the fixing plate 13 where the box 12 of the male mold 10 is also fixed. Therefore, both of the male mold 10 and the frame clamp 14 can be simultaneously moved close to or away from the thermoforming sheet 1 by way of actuating the fixing plate 13 with an actuating device not shown in Figures.

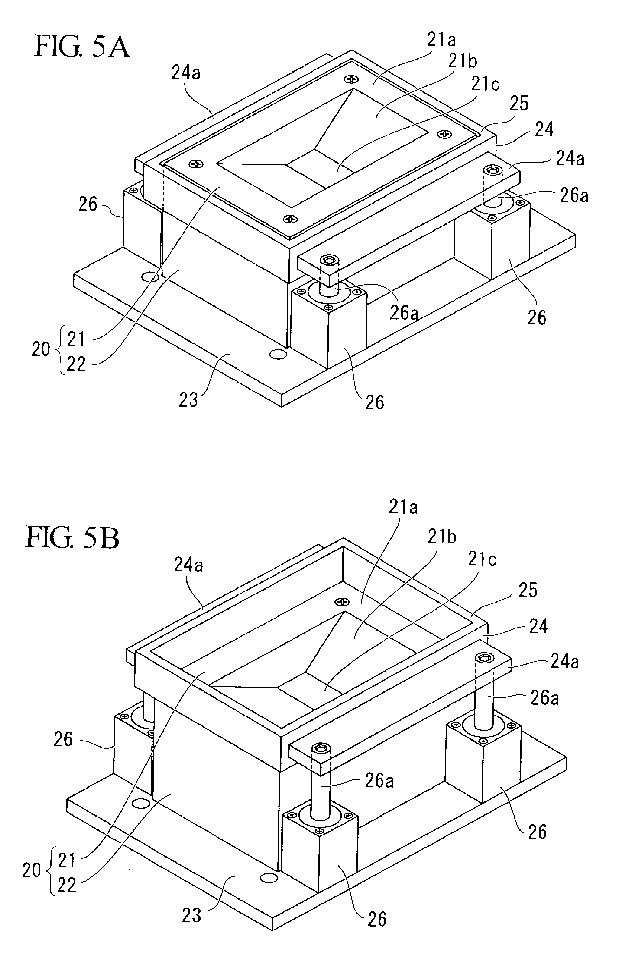

As shown in Figure 5, the female mold 20 is equipped with a female mold body 21 that comes into contact with the thermoforming sheet 1 and that forms the shape of the projecting side of the formed article; and a box 22 in which the female mold body 21 is installed. A block 22a is installed between the backside of the female mold body 21 and the bottom of the box 22 to occupy the space thereof (See Figures 1 and 2), and the box 22 is fixed on the fixing plate 23. The female mold body 21 has a horizontal plane 21a that is provided on the circumferential area; a bottom plane 21c that is provided in the central portion of the female mold body 21; and an inclined plane 21b that stretches between the horizontal plane 21 a and the bottom plane 21c, and the inclined plane 21b and the bottom plane 21c is present below the level of the horizontal plane 21a. A flow channel of the medium such as water or oils is provided inside the female mold 20 in order to control the temperature of the mold (not shown in Figures), and the female mold 20 can be connected to a device for controlling the temperature of the mold via the flow channel. However, the method of controlling the temperature of the mold is not particularly limited, and other methods can be applied in addition to the above-described method.

An air vent port or a vacuum port (not shown in Figures) may be provided in the junctional region between the inclined plane 21b and the bottom plane 21c of the female mold 20 if necessary. It is preferable that these ports be as small as possible lest the formed product is marked by the ports. The diameter of the port is preferably within a range of 0.3 mm to 1.2 mm, more preferably within a range of 0.3 mm to 0.6 mm.

A frame clamp 24 is provided around the female mold 20. A pair of projected parts 24a is formed at both sides of the frame clamp 24, the projected parts 24a extend outward, and the top of a driving shaft (rod) 26a of the cylinder 26 is fixed to the projected part 24. According to this configuration, the frame clamp 24 can move relatively to the female mold 20. Figure 5A shows the state where the frame clamp 24 is moved downward to the female mold 20 while Figure 5B shows the state where the frame clamp 24 is moved upward to the female mold 20. The cylinder 26 that actuates the frame clamp 24 is fixed onto the fixing plate 23 where the box 22 of the female mold 20 is also fixed. Therefore, both of the female mold 20 and the frame clamp 24 can be simultaneously moved close to or away from the thermoforming sheet 1 by way of actuating the fixing plate 23 with a driving device not shown in Figures.

In the matched-mold forming, the surface shapes of the male mold 10 and the female mold 20 need to be identical. However, it is necessary to appropriately adjust the clearance between the male and female molds, where the male mold 10 is jointed to the female mold 20, considering the thickness of the thermoforming sheet 1 used therein, and the expansion rate of the sheet during forming. Specifically, it is preferable that the clearance between the male mold 10 and the female mold 20 be within a range of -50% to +30% with respect to the thickness distribution of the three-dimensionally formed article, and the clearance may be more preferably set within a range of -30% to +10%. If the clearance between the molds is too large, then, the sheet cannot be properly mold-clamped with both the molds. Consequently, the reproducibility of the molded shape of the formed articles becomes worse, and deformation of the formed article also becomes larger because of nonuniform cooling. On the other hand, if the clearance is insufficiently small, then, the formed articles easily have a mark caused from excessive pressure, or a vacuum port mark thereon. In particular, when a decorated sheet having certain design properties is used as the thermoforming sheet 1, the change of design properties can be made small by appropriately adjusting the above clearance, and a formed article having desired design properties can be easily obtained.

In addition, in the present invention, if the heated molds are used, the molds need to be designed considering their rates of thermal expansion (in particular, adjustment of the clearance).

Specifically, the shape and the size of the molds 10 and 20 can be appropriately designed according to the required shape or size of the formed article, and the shape and the size are not particularly limited since they depend on the thermofomability of the thermoforming sheet 1. However, in order to obtain three-dimensionally-formed products having sufficient shape-reproducibility, R-value of the corner parts of the mold is preferably 0.2 mm or more, the spreading rate is preferably 500% or less, the maximum drawing rate (maximum height / the minimum length of the bottom) is preferably 1.5 or less, and the maximum inclination angle is 87° or less. Furthermore, it is more preferable that R-value of the corner parts of the mold be 0.5 mm or more, that the spreading rate be 350% or less, that the maximum drawing rate be 1.0 or less, and that the maximum inclination angle be 85° or less.

The present invention utilizes movable frame clamps 14 and 24 in addition to the male mold 10 and the female mold 20 that mold the thermoforming sheet 1 whereby generation of molding wrinkles (caused from dragging of the sheet into molds), which is a problem characteristic of the matched mold forming, can be effectively prevented. In addition, generation of molding wrinkles according to loosening of the sheet during forming can also be prevented at the same time.

The movable frame clamps 14 and 24 can clamp the sheet 1 after heating because these are movable whereby the clamps can tightly clamp the thermoforming sheet 1, and can effectively control the molding wrinkles caused from dragging of the sheet into the molds 10 and 20. General continuous molding machines rarely use frame clamps as a method of fixing the sheet during heating, and, even if they use frame clamps, their strength of fixing the sheet is insufficient since they clamp the sheet before heating it. Furthermore, in general, the thermoforming sheet 1 is likely loosened owing to thermal expansion below the glass transition temperature of the thermoplastic resin layer (A), and there has been a problem that this loosening of the sheet generates molding wrinkles. However, when movable frame clamps 14 and 24 that are distinctive components in the present invention are used, the heated thermoforming sheet I is pressed onto the male mold 10 or the female mold 20 while the sheet is hold by the frame clamps 14 and 24 whereby wrinkles possibly present on the sheet before molding (before the female mold 10 and the male mold 20 are jointed) can be removed.

With regard to structures of movable frame clamps 14 and 24, they are preferably designed into a shape that can fix the sheet 1 after heating, and that does not collide with the male mold 10 and the female mold 20 when moving. Specifically, the distance between the movable clamps 14, 24, and the boxes 12, 22 (the distance between the male mold 10 and the female mold 20 if the boxes are not provided) depends on properties and thickness of the sheet, and is not particularly limited. However, it is preferable that the distance be larger than the thickness of the sheet, and be within a region of 20 mm or less.

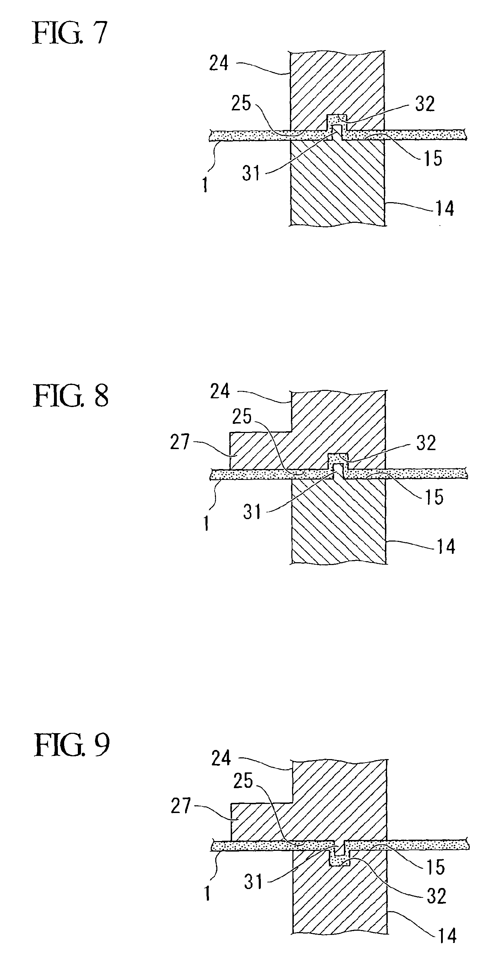

It is preferable that the frame clamps 14 and 24 have a combination of a projected part 31 and a recessed part 32 which can joint with each other and which are present on the surfaces of sheet-fixing parts 15 and 25, respectively, where the thermoforming sheet 1 is clamped, as shown in Figure 7. Accordingly, when the thermoforming sheet 1 is clamped between both frame clamps 14 and 24, the projected part 31 provided on one frame clamp is engaged with the recessed part 32 provided on the other frame clamp, thereby more tightly fixing the thermoforming sheet 1. With regard to the combination of the projected part 31 and the recessed part 32, the projected part 31 may be provided on the frame clamp 14 adjacent to the male mold while the recessed part 32 may be provided on the frame clamp 24 adjacent to the female mold. To the contrary, the recessed part 32 may be provided on the frame clamp 14 adjacent to the male mold while the projected part 31 may be provided on the frame clamp 24 adjacent to the female mold. Furthermore, these two configurations may be combined.

The shapes of the projected part 31 and the recessed part 32 are not particularly limited. For example, the projected part 31 can be shaped into various forms such as a pin-like form, ribbed form, saw-toothed form, mountain-shaped form, triangle form, or cylinder form. The recessed part 32 can be formed into various shapes such as a groove, a hollow having a bottom, or a penetrated hole. In addition, they may be designed into a combined form in which the thermoforming sheet 1 is just sandwiched between the projected part 31 and the recessed part 32 during clamping, or the thermoforming sheet 1 is pierced by them.

The moving direction of the frame clamps 14 and 24 is not particularly limited. However, it is preferable that the frame clamps move in the vertical direction to the horizontal planes 11a and 21a of the molds 10 and 20 since the tension of the sheet 1 can be controlled by using the pressure to make it contact with the molds whereby molding wrinkles can be effectively suppressed, and it is also cost-effective. Furthermore, the power system that actuates the frame clamps 14 and 24 is not particularly limited. However, a system that uses the cylinders 16 and 26 utilizing pneumatic pressure or oil pressure is preferable because the system is simple and easy. In particular, the cylinder using pneumatic pressure (hereinafter, abbreviated as "air cylinder") is more preferable because its actuating speed is faster. In addition, since the clamping force against the sheet becomes uniform when cylinders are used, it is preferable that two or more cylinders be used, and it is more preferable that four or more cylinders be used.

The clamping force to fix the thermoforming sheet by using the frame clamps 14 and 24 is not limited since it depends on properties of the thermoforming sheet 1 and the shape of the frame clamps. However, it is preferable that the clamping force be 5 kgf (about 50 N) or more. Also, it is preferable that the clamping stress be 0.05 kgf/cm² (about 5 kPa) or more.

The materials for the molds 10 and 20, and the movable frame clamps 14 and 24 are not particularly limited in the present invention, and various metals, among others, used for the molds that are used conventionally in the matched mold forming can be used. For example, aluminum-based steels, iron-based steels, thermoset resins or the like can be mentioned. In particular, a hard aluminum steel is preferable as a material for the molds. In addition, the molds can be surface-treated by way of a polishing treatment, fluororesin treatment, alumite treatment, nitride treatment, boron treatment, plating treatment or the like if necessary.

The molds for matched mold forming, and the forming method of the present invention can be used in various forming machines that are equipped with a sheet-heating device, a down-mold-actuating device, and an upper-mold-actuating device. In terms of operativity, a vacuum forming machine (equipped with a plug-system), or vacuum pressure forming machine is preferable. With regard to the sheet-heating device, an indirect heating system wherein the sheet is heated indirectly at one side or both sides is preferable since the surface of the sheet is not marked with the heating device. Moreover, since various types of forming methods can be applied, it is preferable that a vacuum system be provided in at least one of the down-mold-actuating device and the upper-mold-actuating device. One of the actuating devices having a vacuum system may be equipped with a pressing system. Furthermore, a driving system of the down-mold-actuating device and the upper-mold-actuating device is not particularly limited, and an air cylinder system, oil-pressure cylinder system, servo-motor system or the like can be adopted. However, although the force depends on properties of the thermoforming sheet 1, and the shape of the mold, it is necessary that the mold-clamping force of the down mold and the upper mold be 10 kgf (about 100 N) or more in general, and it is more preferable that the mold-clamping force be 100 kgf (about 1 kN) or more since the reproducibility of the molded shape becomes excellent. Also, it is preferable that the mold-clamping stress be 0.05 kgf/cm² (about 5 kPa) or more. In addition, "mold-clamping force" refers to maximum compressive force when the female mold and the male mold are jointed. Specifically, the mold-clamping force refers to a thrust (driving force) calculated by subtracting the larger one of the maximum thrusts of the movable frame clamps for the female mold and the male mold from the smaller one of the maximum thrusts of the down-mold-actuating device and the upper-mold-actuating device.

That is, according to the forming apparatus of the present invention, the clamping force against the sheet, the molding speed, and the mold-claming force of the molds can be freely selected by way of adjusting the thrusts of the down-mold-actuating device, the upper-mold-actuating device, the movable frame clamp for the female mold, and the movable frame clamp for the male mold. For example, if the thrust of the movable frame clamps is increased, then, the clamping force against the sheet becomes larger, the molding speed becomes slower, and the mold-clamping force becomes smaller. On the other hand, if the thrust of the movable frame clamps is decreased, then, the clamping force against the sheet becomes smaller, the molding speed becomes faster, and the mold-clamping force becomes larger.

As the forming method of the present invention, it is preferable that the matched mold forming according to the following procedures (1) to (9) be adopted.
(1) fixing the thermoforming sheet 1 by using clamps attached to the forming machine (not shown in Figures);
(2) moving a heater (not shown in Figures) upward and/or downward to the sheet 1;
(3) heating the sheet 1 to a predetermined temperature by using the heater. The predetermined temperature is set preferably at a temperature that can maintain design properties of the sheet. For example, it is preferable that the temperature be within a range of (Tg (A) - 30)°C to (Tg (A) + 10)°C where the thermoforming sheet used therein includes at least a thermoplastic resin layer (A) and a decorative layer (B), and "Tg (A)" refers to the glass transition temperature of the thermoplastic resin layer (A). In addition, the region of the sheet that is heated includes at least a part of the sheet that is molded with molds, but it is preferable that the region that further includes the portion of the sheet that is clamped with frame clamps be uniformly heated in general;
(4) transferring the heater outside the forming machine;
(4') transferring the heated sheet to the position of the molds if the sheet is heated at a different place apart from the position where the sheet is molded;
(5) moving down the female mold 20 which is located above the sheet 1, and lifting up the male mold 10 which is located under the sheet 1;
(6) clamping the both sides of the thermoforming sheet 1 with the frame clamps 14 and 24, and then, mold-clamping the sheet 1 with the female mold 20 and the male mold 10 by moving down the female mold 20 and by lifting up the male mold 10, thereby forming the three-dimensional shape;
(7) maintaining the sheet 1 for a predetermined time while being clamped between the female mold 20 and the male mold 10;
(8) lifting up the female mold 20, and moving down the male mold 10, thereby releasing the three-dimensionally formed article from the molds 10 and 20, and from the frame clamps 14 and 24, and then cooling the formed article for a predetermined time with air or the like;
(9) opening the clamps attached to the forming machine.

It is preferable that the sheet be not in contact with the molds when the sheet is clamped during step (6) since the expansion of the sheet is likely to be uniform.

In steps (2) to (4), the upward and downward movement of the cylinders 16 and 26 may be controlled by way of manual operation or controlling solenoid valves whereby the level of the frame clamps 14 and 24 can be controlled, and the frame clamps 14 and 24 can be prevented from colliding with the heater during the operation.

In addition, the sheet 1 may be transferred out of the molds 10 and 20, and may be moved to the place of the heater (not shown in Figures) provided outside the forming machine instead of conducting the above step (2). In this case, the sheet 1 is transferred from the outside of the forming machine to the place between the molds 10 and 20 instead of the above step (4).

In step (8), if the mold-releasing speed becomes faster due to the movement of the cylinder 16 whereby the mold-releasing properties of the male mold against the formed article therefore become inferior, then, the female mold may be moved down while making the cylinder 16 to freely move by way of manual handling or controlling solenoid valves.

Moreover, the male mold 10 may be positioned above the sheet I while the female mold 20 may be positioned under the sheet 1. In this case, the male mold 10 is moved down, and the female mold 20 is lifted up during steps (5) and (6), and the male mold 10 is lifted up, and the female mold 20 is moved down during step (8).

Furthermore, in step (6), the following forming method A or B can be selected according to how the shape and the thrusts of the movable frame clamps 14 and 24 are adjusted or selected. Either forming method can be adopted, but it is preferable that the appropriate method be selected considering the design of the molds, the structure of the sheet, or the like.

### (Forming method A)

As shown in Figure 1A, the both sides of the thermoforming sheet 1 are clamped with the frame clamps 14 and 24, and then, as shown in Figure 1B, the downward thrust of the frame clamp 24 adjacent to the female mold is made smaller than the upward thrust of the frame clamp 14 adjacent to the male mold, whereby the thermoforming sheet 1 that is fixed with movable frame clamps 14 and 24 after heating is first pressed onto the female mold 20. That is, the horizontal plane 21a of the female mold 20 is pressed to the central portion of the thermoforming sheet 1, and the part 2 of the thermoforming sheet 1 that is molded with molds is projected toward the male mold 10. Consequently, a difference in level is present in the thermoforming sheet 1 between the portion of the sheet that is in contact with the horizontal plane 21a of the female mold 20, and the portion which is clamped with frame clamps 14 and 24, whereby wrinkles can be smoothed out from the sheet 1. Then, as shown in Figure 1C, the sheet 1 is formed into a three-dimensional shape by holding the sheet between the male mold 10 and the female mold 20.

In Figure 1B, the level-difference between the horizontal plane 21 a of the female mold 20, and the plane 25 where the sheet 1 is clamped with the frame clamp 24 adjacent to the female mold is not particularly limited because the difference depends on properties of the thermoforming sheet 1, and the shape of the molds. However, it is preferable that the difference be within a range of 2 mm to 30 mm since looseness of the sheet is sufficiently removed when low-temperature forming is conducted. In addition, the sign of the level-difference shows positive when the horizontal plane 21 a of the female mold 20 is projected toward the male mold 10 ahead of the clamping plane 25 of the frame clamp 24 adjacent to the female mold.

According to the forming method A, when a decorated sheet having a decorative layer is applied, a formed article having excellent sharpness of the decoration can be easily obtained by way of facing the design-visible side, where the decorative layer is visible, to the female mold 20. Furthermore, when the obtained formed article is partially decorated by using a decorated sheet having a decorative layer of the printed pattern, it is easy to adjust the positions of the patterns, and thickness deviation that may occur during forming is difficult to occur whereby the ununiform distortion of the patterns hardly occurs.

In addition, the above effects can be achieved even if the female mold 20 is located at the down side, and the male mold 10 is located at the upper side.

### (Forming method B)

As shown in Figure 2A, the both sides of the thermoforming sheet 1 are clamped with the frame clamps 14 and 24, and then, as shown in figure 2B, the downward thrust of the frame clamp 24 adjacent to the female mold is made larger than the upward thrust of the frame clamp 14 adjacent to the male mold, whereby the thermoforming sheet I that is fixed with the movable frame clamps 14 and 24 after heating is first pressed onto the male mold 10. That is, the top plane 11c of the male mold 10 is pressed to the central portion of the thermoforming sheet 1, and the part 2 of the thermoforming sheet 1 that is molded with molds is projected toward the female mold 20. Consequently, a level-difference is present in the region 2b of the thermoforming sheet 1 between the portion 2a of the sheet that is in contact with the top plane 11c of the male mold 10, and the portion which is clamped with frame clamps 14 and 24, whereby wrinkles can be smoothed out from the sheet 1. Then, as shown in Figure 2C, the sheet 1 is formed into a three-dimensional shape by holding it between the male mold 10 and the female mold 20.

In Figure 2B, the level-difference between the horizontal plane 11a of the male mold 10, and the plane 15 where the sheet 1 is clamped with the frame clamp 14 adjacent to the male mold is not particularly limited because the difference depends on properties of the thermoforming sheet 1, and the shape of the molds. However, it is preferable that the difference be within a range of-30 mm to 15 mm since looseness of the sheet is sufficiently removed when low-temperature forming is conducted. In addition, the sign of the level-difference shows positive when the horizontal plane 11a of the male mold 10 is projected toward the female mold 20 ahead of the clamping plane 15 of the frame clamp 14 adjacent to the male mold, and the sign shows negative when the horizontal plane 11a is located below the level of the clamping plane 15. In the case of Figure 2B, since the horizontal plane 11a of the male mold 10 is present almost on the same level as the clamping plane 15 of the frame clamp 14 adjacent to the male mold, the level-difference can be considered as about 0 mm. In addition, when the level-difference between the horizontal plane 11a of the male mold 10, and the plane 15 where the sheet 1 is clamped with the frame clamp 14 adjacent to the male mold is made less than 0 mm, and the air is aspirated from the vacuum port provided in the male mold, the reporoducibility of the molded shape may be further improved.

According to the forming method B, the sheet 1 can be expanded between the top plane 11c of the male mold 10, and the frame clamps 14 and 24 without bringing the sheet into contact with the inclined plane 11b and the horizontal plane 11a of the male mold 10 whereby a much larger area of the sheet can be assigned to inclined portions of the formed article (portions that are formed by the inclined planes 11b and 21 b of the molds 10 and 20). Consequently, when molds that have a shape including parts where the expansion rate is high or parts where their inclination is large are used, formed articles having excellent reproducibility of the molded shape can be easily obtained.

In addition, the above effects can be achieved even if the female mold 20 is located at the down side, and the male mold 10 is located at the upper side.

Next, the second embodiment of the forming method and forming apparatus of the present invention will be described hereinafter.

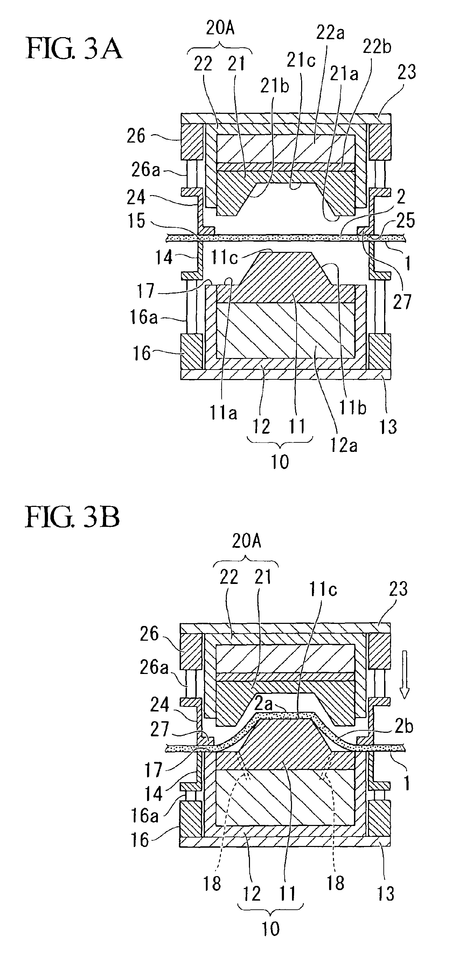

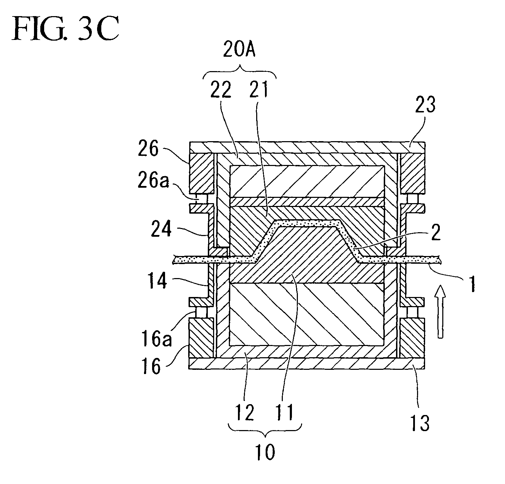

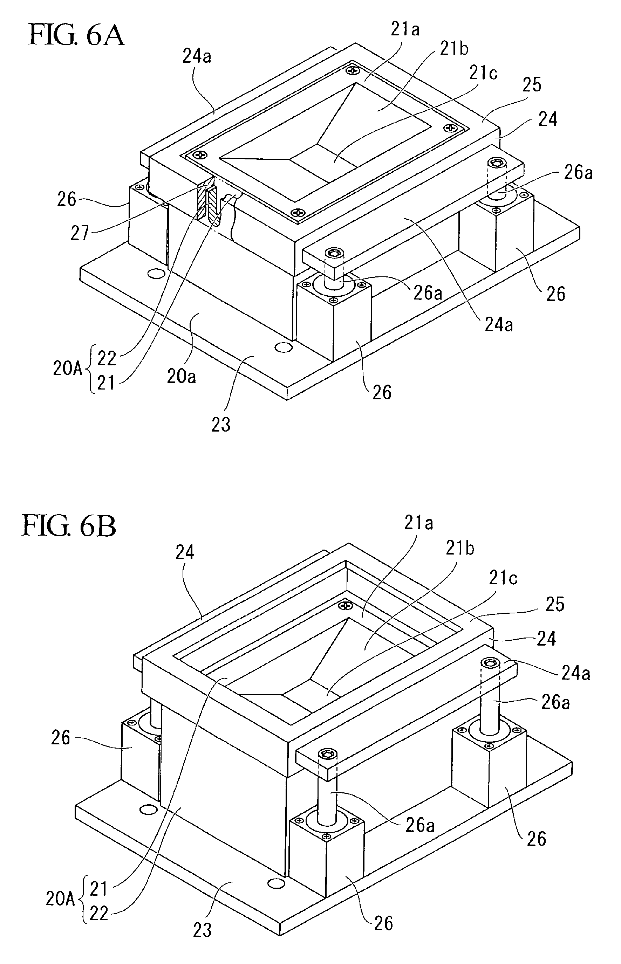

Figure 3 shows cross sections which illustrate the second embodiment of the forming method of the present invention. Figure 6 shows perspective views which illustrate a female mold wherein the frame clamp used in Figures 3 is provided.

In this embodiment, those shown in Figure 4 can be used as the male mold 10 and the frame clamp 14 for the male mold in the same manner as in the first embodiment. As shown in Figures 3 and 6, a frame clamp in which a flange 27 extends inward from the inner side of the frame clamp 24, and the flange 27 is provided more inward with respect to the inner perimeter of the frame clamp 14 is used as the frame clamp 24 for the female mold. In this case, a female mold whose horizontal plane 21 a of the female mold body 21 projects ahead of the outer marginal portion of the box 22 to the extent that the longitudinal length of the projected portion of the female mold body is identical to the thickness of the flange 27 or larger than the thickness can be used as the female mold 20A. As a method of adjusting the height of the female mold body 21, a method wherein a plate 22b is inserted into the backside of the female mold body 21 to adjust the height can be mentioned. According to this method, the female mold 20A shown in Figure 6 can be constructed by just inserting the plate 22b into the box 22 for the female mold 20 shown in Figure 5.

In the same manner as the first embodiment of the forming apparatus, it is preferable that the frame clamps 14 and 24 of the second embodiment also have a combination of the projected part 31 and the recessed part 32, which match to one another, on the sheet-fixing parts 15 and 25 where the thermoforming sheet 1 is clamped (see Figures 8 and 9). Accordingly, when the thermoforming sheet 1 is clamped between both the frame clams 14 and 24, the projected part 31 provided on one frame clamp is engaged with the recessed part 32 provided on the other frame clamp, thereby more tightly fixing the thermoforming sheet 1. With regard to the combination of the projected part 31 and the recessed part 32, the projected part 31 may be provided on the frame clamp 14 adjacent to the male mold while the recessed part 32 may be provided on the frame clamp 24 adjacent to the female mold. To the contrary, the recessed part 32 may be provided on the frame clamp 14 adjacent to the male mold while the projected part 31 may be provided on the frame clamp 24 adjacent to the female mold. Furthermore, these two configurations may be combined.

In the second embodiment, the sheet 1 can be subjected to forming by way of the above-described forming method B (the male mold is first pressed against the sheet). That is, after the both sides of the thermoforming sheet 1 are clamped with the frame clamps 14 and 24 as shown in Figure 3A, the clamping pressure of the frame clamp 24 adjacent to the female mold is made larger than the clamping pressure of the frame clamp 14 adjacent to the male mold whereby the heated thermoforming sheet 1 clamped between movable frame clamps 14 and 24 is first pressed onto the male mold 10 as shown in Figure 3B. More specifically, the top plane 11c of the male mold 10 is pressed to the central portion of the thermoforming sheet 1, and the part 2 of the thermoforming sheet 1 that is molded with molds is projected toward the female mold 20A. Consequently, a level-difference is present in the region 2b of the thermoforming sheet 1 between the portion 2a of the sheet that is in contact with the top plane 11c of the male mold 10, and the portion which is clamped with frame clamps 14 and 24, whereby wrinkles can be smoothed out from the sheet 1. Then, as shown in Figure 3C, the sheet 1 is formed into a three-dimensional shape by holding it between the male mold 10 and the female mold 20A. Furthermore, when the heated thermoforming sheet 1 fixed with the movable frame clamps 14 and 24 is first pressed onto the male mold 10 during the steps of Figure 3B, the thermoforming sheet 1 is clamped between the flange 27 present at the inner side of the frame clamp 24 adjacent to the female mold and the outer marginal portion 17 of the male mold 10 (the marginal portion of the box 12), and the air around the thermoplasticized portion of the thermoforming sheet 1 is vacuum-aspirated from the vacuum port 18 (see Figure 3B) that is provided at the bottom of the male mold 10 (a junctional portion between the horizontal plane 11a and the inclined plane 11b).

According to this configuration, a vacuum formed at the side of the male mold can be sufficiently used, and therefore, formed article thereof having more excellent reproducibility of the molded shape can be easily obtained. When the vacuum aspiration is conducted, it is preferable that the horizontal distance (the distance in the lateral direction in Figure 3B) between the projected portion of the male mold 10 and the flange 27 be within a range of 5 mm to 50 mm since the generation of wrinkles can be suppressed, and the reproducibility of the formed shape can be more improved. In addition, with regard to the shape of the flange 27, it is unnecessary that the distance between the projected portion of the male mold 10 and the flange 27 be uniform. The distance may be intentionally made longer around the portion where the expansion rate is higher, or may be intentionally made shorter around the portion where bridging defects are likely to occur, whereby maintenance of the design properties and the reproducibility of the molded shape can be further improved.

When a decorated sheet having design properties is used, the lower forming temperature is applied, the less the design properties change. Therefore, formed articles having excellent sharpness of decoration can be easily obtained. In addition, according to the present invention, formed articles having excellent reproducibility of the molded shape can be obtained even at a relatively low temperature. Accordingly, it is preferable that the thermoforming temperature be lower than the vacuum forming temperature (an optimum temperature for vacuum-forming the sheet) by 10°C or more. Specifically, when the sheet having design properties is a thermoforming sheet that has at least a thermoplastic resin layer (A) and a decorative layer (B), the sheet may be formed within a range of (Tg (A) - 30)°C to (Tg(A) + 10)°C where Tg (A) refers to the glass transition temperature of the thermoplastic resin layer (A). When the sheet is formed at such a temperature range, the design properties are not adversely affected. For example, a formed article having a high metallic luster can be obtained when a decorated sheet having a metallic sheen is applied, or a formed article having no uneven color or color changes can be obtained when a printed-like decorated sheet that uses pigments therein is applied. Furthermore, when a decorated sheet that has printed patterns in the decorative layer to partially decorate the formed article is used, the above-mentioned way of forming at the temperature range is preferable since it is easier to appropriately arrange design patterns on the formed article.

However, the glass transition temperature (hereinafter, abbreviated as "Tg") refers to a temperature (called "a peak temperature") where the mechanical damping (hereinafter, shown as "tan δ") becomes a maximum value while the mechanical damping is measured under the measurement conditions: the frequency of 1 Hz; the measurement-starting temperature of 0°C; and the increase in rate of 3°C/minute, using the measurement method of dynamic viscoelasticity (hereinafter, shown as "DMA", namely dynamic mechanical analysis) based on JIS K7244-1 with respect to a film-like or sheet-like test sample.

When the thermoforming sheet includes a plurality of thermoplastic resin layers (A), the highest temperature is considered as Tg (A) among the Tgs of the thermoplastic resin layers (A). In addition, at least one layer of the plural thermoplastic resin layers (A) needs to be a resin layer having a Tg. Therefore, if there is a layer among the plural thermoplastic resin layers wherein the tan δ does not exhibit a maximum value (for example, crystalline resins such as PP), the above-described temperature region is based on the Tg of the layer having a Tg. Furthermore, it is more preferable that the thermoforming temperature be within a range of (Tg (A) - 25)°C to (Tg(A)+5)°C.

More specifically, when a far-infrared heater is used, it is preferable that the heater temperature be within a range of 200 to 500°C, that the indirect heating time be within a range of 5 second to 30 second, and that the temperature be specifically a temperature where it becomes possible for the sheet to be applicable to the matched mold forming, for example, a temperature where the storage elastic modulus (E') of the DMA is within a range of 10 MPa to 500 MPa.

In general, the forming temperature for the thermoplastic resin sheet depends on the elastic modulus of the thermoplastic resin and the shape of the formed article. However, a temperature at which the storage elastic modulus of the DMA (E') becomes 50 MPa or less may be a standard for vacuum forming, a temperature at which the storage elastic modulus of the DMA (E') becomes 250 MPa or less may be a standard for pressure forming, and it is generally considered that it is difficult to conduct forming below such temperatures. Specifically, it is required to heat the thermoforming sheet to a temperature 20°C greater than Tg of the thermoplastic resin layer or above the temperature thereof in order to decrease the storage elastic modulus to 50 MPa or less.

On the other hand, in the method of forming the thermoforming sheet according to the present invention, it is possible to conduct forming at a temperature where the storage elastic modulus becomes 500 MPa or less, and, for example, it is possible to perform forming by way of heating the thermoforming sheet at (Tg (A) - 30)°C or more with respect to Tg (A) of the thermoplastic resin layer (A).

In general, when the thermoplastic resin sheet is heated, the sheet often undergoes processes of first expansion, heat shrinkage, and second expansion (drawdown) in order. In general thermoforming methods such as vacuum forming, the sheet is formed in molds at a temperature of the heat shrinkage to the second expansion, but the present invention enables forming within a temperature range of the first expansion to the heat shrinkage. Therefore, in the present invention, it is possible to conduct forming at a low temperature where the design properties are not deteriorated.

That is, the wrinkles that the present invention considers as a problem to be solved are different from those which can be considered as a problem to be solved by the Patent Documents 1 and 2. More specifically, the generation of wrinkles during forming, which can be solved by the above-mentioned patent documents 1 and 2, results from loosening of the sheet owing to the second expansion. However, the wrinkles which can be solved by the present invention result from loosening of the sheet owing to the first expansion, and also result from dragging of the sheet that is difficult to extend because of the low temperature forming into the molds, and therefore, the wrinkles cannot be solved by known methods such as the above-mentioned techniques.

The mold temperature is not particularly limited since the temperature depends on properties of the thermoforming sheet 1, and may be appropriately adjusted according to the external appearance of the formed article, the reproducibility of the molded shape, mold shrinkage factor and the extent of the deformation. For example, when a laminate sheet that includes a thermoplastic resin layer having a Tg of 0°C or more is used, it is preferable that the temperature of the mold that comes into contact with the layer be set within a range of (Tg - 50)°C to (Tg - 10)°C since the reproducibility of the molded shape can be improved, and a temperature gradient may be set between the mold and another mold. In addition, after press forming is completed, it is preferable that the obtained formed article be cooled with the air or the like. Specifically, excellent forming can be accomplished when the mold temperature is within a range of 20°C to 200°C, and the time for mold-clamping the sheet with the male mold and the female mold (that refers to the above-described step (7)) is within a range of 10 seconds to 5 minutes.

When a laminate sheet having a decorative layer is used, either side of the sheet can be first brought into contact with a mold, and which side of the sheet should first come into contact with a mold is not particularly limited. However, if the thermoplastic resin layer (A) (the design-present side where the decorative layer (B) is visible) is first brought into contact with a mold, the uniform orientation of metal flakes in the decorative layer can be easily maintained with the mold, and therefore, a formed article having excellent sharpness of the decoration can be easily obtained. When a laminate sheet in which a plurality of thermoplastic resin layers (A) are present, and in which a transparent or semi-transparent thermoplastic resin layer (A-1), a decorative layer (B), and a thermoplastic resin layer (A-2) that functions as a support substrate are layered in order is used, the sheet may be deformed from the side of the sheet where the thermoplastic resin layer (A-2) (support substrate) is present whereby the deformation of the decorative layer (B) will be moderate, and therefore, it is considered that the maintenance of the design properties be improved. On the other hand, according to circumstances, it may be preferred in terms of the reproducibility of the molded shape that the sheet be deformed from the side of the sheet where the thermoplastic resin layer having Tg (A-M) is present (i.e. the side that is difficult to be deformed).

Therefore, it is required that the more appropriate method be selected according to the mold design, the structure of the sheet, among others.

### (Thermoforming sheet)

In the present invention, a monolayer-sheet made of a resin or the like, or a laminate sheet wherein plural layers are laminated can be used as the thermoforming sheet. However, it is preferable that a decorated sheet having design properties be adopted since the effects of the present invention can be remarkably exhibited therein. The coloring agents included in the decorative layer that imparts design properties to the sheet are not particularly limited, and, in the method of the present invention, even a coloring agent that is susceptible to heat can be used. The examples of such a heat-sensitive coloring agent include metal-evaporated films, metal inks that use metal flakes or metal particles, inorganic pigments such as iron oxides, organic pigments such as azo pigments, and oil-soluble dyes.

### (Decorative layer)

The decorative layer (B) can be obtained, for example, by way of spreading inks or coating paints on the thermoplastic resin layer (A), based on a general method. In the case of a metallic design, a metal thin film may be formed by way of the vacuum evaporation method, the sputtering method, the plating method or the like. When a laminate sheet wherein a plurality of thermoplastic resin layers (A) are present, and wherein a transparent or semi-transparent thermoplastic resin layer (A-1), a decorative layer (B), a thermoplastic resin layer (A-2) that functions as a supportive substrate are layered in order is used, it is preferable in terms of design properties that the inks or coating paints be spread onto the transparent or semi-transparent thermoplastic resin layer (A-1).

The method of spreading the inks or coating paints on the thermoplastic resin film layer includes, for example, printing methods such as gravure printing, flexographic printing or screen printing; and coating systems such as a gravure coater, gravure reverse coater, flexo coater, blanket coater, roll coater, knife coater, air-knife coater, kiss-touch coater (kiss coater), kiss-touch reverse coater, comma coater, comma reverse coater, or micro gravure coater.

The concealment properties become inferior if the decorative layer is excessively thin, thereby deteriorating the design properties thereof while uneven coloring is likely to occur during thermoforming if the decorative layer is excessively thick. Therefore, when inks or coating paints are used for forming the decorative layer, the thickness of the layer is set preferably within a range of 0.1 µm to 5 µm, and more preferably within a range of 0.5 µm to 3 µm. Also, when metal films are used therein, the thickness is set preferably within a range of 0.01 µm to 0.1 µm, and more preferably within a range of 0.02 µm to 0.08 µm. In addition, in order to adjust adhesion properties between the thermoplastic resin film layer and the decorative layer, the surface of the thermoplastic resin film may be subjected to a surface treatment such as the corona treatment or primer coating.

### (High brilliant ink)

As the decorative layer that can form a metallic design, a metal thin film layer obtained by way of the vaccum evaporation or the like can be used. In this case, the contents of the metal thin film include aluminum (Al), gold (Au), platinum (Pt), silver (Ag), copper (Cu), brass (Cu-Zn), titanium (Ti), chromium (Cr), nickel (Ni), indium (ln), Molybdenum (Mo), Tungsten (W), palladium (Pd), iridium (Ir), silicon (Si), tantalum (Ta), nickel-chrome (Ni-Cr), stainless steel (SUS), copper-chromium (Cr-Cu), or aluminum-silicone (Al-Si).

If the forming method and the forming apparatus of the present invention are used, the deterioration of the brilliance that results from cracks in the metal thin film layer can be effectively prevented in parts of the sheet that are highly spread in general. However, it is preferable that a high brilliant ink layer that is made from high brilliant inks be used therein since the use of the high brilliant ink layer can further suppress the above-mentioned decline of the brilliance. "High brilliant ink" refers to an ink having mirror-like metallic luster that is formed by dispersing metal flakes (metal thin film flakes) into a binding resin. It is preferable that the content of the metal flakes be within a range of 3% to 60% by mass with respect to non-volatile contents in the ink. The high brilliant ink that uses metal flakes can exhibit mirror-like metallic luster of high brilliance which cannot be obtained by using conventional metallic inks that use metallic powders because the metal flakes are orientated in the direction parallel to the surface of the coat when the ink is printed or coated thereon.

### (Metal flakes in the high brilliant ink)

With regard to the metal material used as the metal flakes included in the high brilliant ink, the above-described metals can be preferably used to form a metal film. As a method of forming metals into a film, the evaporation method can be used with respect to metals having a low melting temperature (such as aluminum); a foil can be used with respect to malleable metals such as aluminum, gold, silver or copper; or the sputtering method can be used with respect to metals that have a high melting temperature and inferior malleability. Among these methods, metal flakes obtained from the evaporated metal film are preferably used. The thickness of the metal film is preferably within a range of 0.01 µm to 0.1 µm, and more preferably within a range of 0.02 µm to 0.08 µm. The size of the metal flakes dispersed in the ink is preferably within a range of 5 µm to 25 µm, and more preferably within a range of 10 µm to 15 µm in the planar direction. If the size of the metal flakes in the planar direction is under 5 µm, the brilliance of the high brilliant ink film will decline, and the metal flakes may cause clogging in the plate when the ink is printed or coated thereon by way of the gravure printing or screen printing system.

Hereinafter, the evaporation method is described as a particularly preferable example of the method of forming the metal flakes. A polyolefin film or polyester film can be used as a substrate film where the metal is evaporated. First, a release layer is formed on the substrate film by way of coating or other general methods, and then, the metal is evaporated in a predetermined thickness onto the release layer. A top coat layer is coated on the surface of the evaporated metal to prevent oxidation. The coating agents that form the release layer and the top coat layer may be identical or different.

Resins included in the release layer or the top coat layer are not particularly limited. Specifically, the examples of the resins include cellulose derivatives such as a nitrocellulose, acryl resins, vinyl-based resins, polyamides, polyesters, ethylene-vinyl alcohol (EVA) resins, chlorinated polyethylenes, chlorinated EVA resins, or petroleum-based resins. With regard to a solvent used for the release layer or the top coat layer, aromatic hydrocarbons such as toluene or xylene; aliphatic or alicyclic hydrocarbons such as n-hexane or cyclohexane; esters such as ethyl acetate or propyl acetate; alcohols such as methanol, ethanol or isopropyl alcohol; ketones such as acetone or methyl ethyl ketone; alkylene glycol monoalkyl ethers such as ethylene glycol monoethyl ether or propylene glycol monomethyl ether, among others can be preferably used.

The above-described metal-evaporated film is soaked in a solvent that can dissolve the release layer and the top coat layer, and this is stirred to separate the metal-evaporated film. The separated metal-evaporated film is further stirred until metal flakes that have a size of about 5 µm to 25 µm in the planar direction appear, the metal flakes are separated by way of filtration, and the metal flakes are dried. The solvent used for separating the metal-evaporated film is not particularly limited as long as it can dissolve the release layer and the top coat layer. When a metal film is prepared by way of sputtering, the film can be formed into metal flakes by way of the above-described method. When a metal foil is used, the foil may be soaked in a solvent, and may be stirred by a stirrer to crush it into flakes of a predetermined size.

It is preferable that the metal flakes be subjected to a surface treatment in order to improve their dispersibility in the ink. Examples of the surface-treating agents include organic fatty acids such as a stearic acid, oleic acid or palmitic acid; isocyanates such as methylsilyl isocyanate; or cellulose derivatives such as a nitrocellulose, cellulose acetate propionate, cellulose acetate butyrate, or ethyl cellulose, and these are adhered to metal flakes by way of the general methods.

### (Binding resin in high brilliant ink)

Those conventionally used in gravure inks, flexo inks, screen inks, or coating paints can be used as binding resins used in the above-described high brilliant ink. For example, polymer resins such as acrylic resins used for coating paints, vinyl chloride resins, vinylidene chloride resins, vinyl chloride-vinyl acetate resins, ethylene-vinyl acetate resins, polyolefin resins, chlorinated olefin resins, ethylene-acrylic resin; polyurethane resins used for coating paints; polyamide resins; urea resins; epoxy resins; polyester resins; petroleum-based resins; or cellulose derivative resins are preferably used. In addition, those obtained by chemically combining a polar group (such as a carboxylate group, phosphate group, sulfonate group, amino group, or quaternary ammonium salt group) with these resins may be used alone or in combination.

### (Additives in the high brilliant ink)

To the above high brilliant ink, additives used in conventional gravure inks, flexo inks, screen inks, coating paints or the like may be added, if necessary, in order to achieve defoaming, prevention of sedimentation, dispersion of pigments, improvement of fluidity, prevention of blocking, antistatic properties, anti-oxidant properties, photostability, ultraviolet absorption, internal crosslinkage or the like as long as the addition does not impair design properties and spreadability of sheet. Such additives include coloring pigments, dyes, waxes, plasticizers, leveling agents, surfactants, dispersing agents, antifoaming agents, chelating agents, or polyisocyanates.

### (Solvent in high brilliant ink)

Solvents conventionally used in gravure inks, flexo inks, screen inks, or coating paints can be used as a solvent used in the above-described high brilliant ink. The examples include aromatic hydrocarbons such as toluene or xylene; aliphatic or alicyclic hydrocarbons such as n-hexane or cyclohexane; esters such as ethyl acetate or propyl acetate; alcohols such as methanol, ethanol or isopropyl alcohol; ketones such as acetone or methyl ethyl ketone; alkylene glycol alkyl ethers such as ethylene glycol monoethyl ether or propylene glycol monomethyl ether.

### (Method of preparing the high brilliant ink)

In general, in order to achieve stable dispersion of blending materials in inks, they are milled by using a roll mill, ball mill, bead mill, sand mill or the like, whereby the pigments and other additives can be formed into submicron particles. However, it is preferable that the size of metal flakes be 5 µm to 25 µm in the above high brilliant ink in order to impart a metallic luster, and the above-described procedures of milling will form metal flakes into excessively fine particles, thereby deteriorating the metallic luster. Therefore, it is preferable that the above-described mixing materials be simply mixed to prepare the high brilliant ink instead of milling. Because of this procedure, it is preferable that metal flakes be surface-treated as described above to improve their dispersibility.

In the present invention, it is particularly preferable that a laminate sheet having a structure wherein the decorative layer is placed between thermoplastic resin layers be used since the sheet can be formed (molded) into a desired shape without deteriorating excellent design properties of the laminate sheet.

Specifically, a laminate sheet wherein a transparent or semi-transparent thermoplastic resin layer (A-1), a decorative layer (B), and a thermoplastic resin layer (A-2) that functions as a support substrate are laminated in order is preferable.

In this laminate sheet, the transparent or semi-transparent thermoplastic resin layer (A-1) is a surface layer, and the decorative layer (B) having high design properties is visible through the transparent or semi-transparent thermoplastic resin layer (A-1). One or more of decoration protective layers, ink layers, adhesive layers or the like may be provided between the transparent or semi-transparent thermoplastic resin layer (A-1) and the decorative layer (B). In addition, one or more surface protective layers (top coat layer) may be provided on the transparent or semi-transparent thermoplastic resin layer (A-1) (at the side that becomes a surface layer during forming).

Moreover, since the three-dimensionally formed article obtained by way of the forming method of the present invention has excellent sharpness of decoration, the formed article can be used preferably in the in-mold molding (insert molding) wherein the formed article is inserted into the injection mold, and this is subjected to the integral injection-molding. In this case, the thermoplastic resin layer (A-2) which functions as a supportive substrate is a layer adjacent to the injected resin of the injection-molding, and therefore, it is preferable that the thermoplastic resin layer (A-2) have thermal adhesiveness to the injected resin. In addition, the thermoplastic resin layer (A-2) which functions as a supportive substrate has functions to protect the decorative layer and to enhance strength or rigidity of the laminate sheet or the obtained formed article.

One or more of the other ink layer, adhesive layers or the like may be provided between the decorative layer (B) and the thermoplastic resin layer (A-2) that functions as a supportive substrate. In addition, when the laminate sheet having such a structure is used, it is preferable that the temperature for the thermoplasticization during forming be within a range of (Tg (A-M) - 30)°C to (Tg(A-M) + 10)°C where Tg (A-M) refers to the higher glass transition temperature of the layer (A-1) and the layer (A-2).

### (Transparent or semi-transparent thermoplastic resin layer (A-1))

With regard to the thermoplastic resin layer (A-1) that can be used in the thermoforming sheet, a film-shaped sheet is preferable, and a film that has expansibility when it is heated can be used. It is preferable that the thermoplastic resin film be a monolayer or multilayer film that is transparent or semi-transparent. The film may contain a coloring agent. Since a process of forming by using heat is conducted in the matched mold forming, a film that mainly includes a thermoplastic resin whose Tg is within a range of 30°C to 300°C is preferable, and it is more preferable that the Tg be within a range of 50°C to 250°C. Examples of the thermoplastic resin include polyolefin resins such as a polyolefin or polypropylene, polyester resins such as a polyethylene terephthalate or polybutylene terephthalate, acrylic resins such as a polymethyl methacrylate or polyethyl methacrylate, ionomer resins, polystyrenes, polyacrylnitriles, acrylnitrile-styrene resins, methylmethacrylate-styrene resins, polyamide resins such as nylon, ethylene-vinyl acetate resins, ethylene-acrylate resins, ethylene-ethylacrylate resins, ethylene-vinyl alcohol resins, chloride resin such as polyvinyl chloride or polyvinylidene chloride, fluororesins such as a polyvinyl fluoride or polyvinylidene fluoride, polycarbonate resins, cyclic polyolefin resins, modified polyphenylene ether resins, methylpentene resins, or cellulose-based resins, and those are preferably used. With regard to these thermoplastic resins, a film that mainly contains one or more selected from the group consisting of an acrylic resin, a polyester resin, a polycarbonate resin, and a cyclic polyolefin resin is preferable since the film imparts excellent thermoformability and excellent sharpness of the decorative layer.

Moreover, two or more of the above-mentioned resins may be mixed or used to form a multilayer structure as long as the transparency of the film is not impaired.

Furthermore, the above-mentioned resin that is used as the thermoplastic resin film may be modified into a rubber-modified form to improve impact resistance as long as the transparency is not impaired. The method of forming the rubber-modified product is not particularly limited. A method wherein a rubber monomer such as a butadiene is added thereto when the resins are polymerized, and they are then copolymerized; or a method wherein the resin and a synthetic rubber or a thermoplastic elastomer are hot-melt-blended can be mentioned. Also, additives generally used in films (such as an antioxidant, ultraviolet absorbing agent or lubricant) may be added to the thermoplastic resin film as long as the transparency is not impaired. In addition, in terms of design properties, the film may contain coloring agents such as a pigment or dye whereby the transparency can be intentionally decreased. The production method of the thermoplastic resin film is not particularly limited, and the resins may be formed into a film based on a general method. Furthermore, the film may be subjected to a treatment of biaxial stretching or uniaxial stretching as long as the expansibility during thermoforming is not impaired.

The thickness of the thermoplastic resin film is not particularly limited. However, the thickness may be set preferably within a range of 30 µm to 2000 µm, and more preferably within a range of 50 µm to 500 µm since ease of coating can be improved when the decoration protective layer (described below) and the decorative layer are spreading layers of inks or the like, and thermofomability can be improved.

### (Thermoplastic resin layer (A-2) that functions as a supportive substrate)

As the thermoplastic resin layer (A-2) that functions as a supportive substrate used in the thermoforming sheet, a film that mainly contains a thermoplastic resin whose Tg is within a range of 30°C to 300°C is preferable because the matched mold forming is performed. It is more preferable that the Tg be within a range of 50°C to 250°C. Examples of the above-described thermoplastic resin include general resins such as an acrylonitrile/butadiene/styrene (ABS) resin, acrylonitrile/acrylic rubber/styrene (AAS) resin, acrylonitrile/ethylene rubber/styrene (AES) resin, (meth)acrylate ester/stylene (MS) resin, styrene/butadiene/styrene (SBS) resin, styrene/isoprene/butadiene/styrene (SIBS) resin, polyethylene (PE)-based resin, polypropylene (PP)-based resin, vinyl chloride (PVC)-based resin; or thermoplastic elastomers (TPE) such as a olefin-based elastomer (TPO), vinyl chloride-based elastomer (TPVC), styrene-based elastomer (SBC), urethane-based elastomer (TPU), polyester-based elastomer (TPEE) or polyamide-based elastomer (TPAE). In addition, two or more of the above-mentioned resins may be mixed or used to form a multilayer structure. With regard to the above-described thermoplastic resins, polypropylene-based resins, polyethylene-based resins, a mixed product of the polypropylene-based resins and the polyethylene-based resins, AAS resins, or ABS resins are preferably used since these resins impart excellent formability even if the formed product has a complex shape such as an automobile exterior component. To these resins, rubber-based modifying agents such as an ethylene propylene rubber (EPR), SBS, SIBS or styrene/ethylene/butadiene/styrene (SEBS) may be added. The thickness of the thermoplastic resin layer (A-2) that functions as a supportive substrate is not particularly limited, and, for example, it is preferable that the thickness be within a range of 10 µm to 3000 µm.

### (Inorganic filler in the thermoplastic resin layer (A-2) that functions as a supportive substrate)

The thermoforming laminate sheet is formed into a three-dimensionally shaped formed article by way of thermoforming. If mold shrinkage rates of the thermoplastic resins used in the thermoplastic resin layer (A-2) that functions as a supportive substrate and the thermoplastic resin film layer (A-1) are different, deformation of the formed article will occur, and it is difficult to attain a favorable shape in thermoforming. In this case, an inorganic filler may be added to the resin of the thermoplastic resin layer (A-2) that functions as a supportive substrate whereby the mold shrinkage rate can be precisely adjusted and the difference between mold shrinkage rates of the thermoplastic resins of the supportive substrate resin layer and the thermoplastic resin film layer can be made smaller. Consequently, the deformation can be prevented during or after forming. The type of the inorganic filler used in the present invention is not particularly limited. For example, talc, calcium carbonate, clay, diatom earth, mica, magnesium silicate, silica, etc. can be mentioned.

It is preferable that the amount of the inorganic filler added to the thermoplastic resin layer (A-2) that functions as a supportive substrate be within a range of 5% to 60% by mass (mass percentage) with respect to the resin of the layer (A-2) in terms of balance between the forming processability and the mold shrinkage rate. The particle diameter of the inorganic filler is not particularly limited. However, if the particles size is too large, the surface of the layer (A-2) becomes uneven, and the sharpness of the decoration may be impaired in the case of a decorated sheet having a decorative layer. Therefore, the layer (A-2) that is a substrate for the decorative layer is required to be smooth, and the average particle diameter of the inorganic filler added to the layer (A-2) is preferably 8 µm or less, and more preferably 4 µm or less. In particular, it is preferable that the average particle diameter be 2 µm or less in the case of the decorated sheet having a mirror-like metallic luster.

### (Coloring agent in the thermoplastic resin layer (A-2) that functions as a supportive substrate)

It is preferable that a coloring agent be included in the thermoplastic resin layer (A-2) that functions as a supportive substrate since concealment of the background color of the formed article can be improved. The coloring agent is not particularly limited. General inorganic pigments, organic pigments, dyes, etc. used for coloring general thermoplastic resins can be used according to an intended design. For example, inorganic pigments such as a titanium oxide, titanium yellow, iron oxide, composite oxide-based pigment, ultramarine blue, cobalt blue, chromium oxide, bismuth vanadate, carbon black, zinc oxide, calcium carbonate, barium sulfate, silica or talc; organic pigments such as an azo pigment, phthalocyanine pigment, quinacridone pigment, dioxazine pigment, anthraquinone pigment, isoindolinone pigment, isoindoline pigment, perylene pigment, perynone pigment, quinophthalone pigment, thioindigo pigment, or diketopyrrolopyrrole pigment; and metal complex pigment can be mentioned. In addition, it is preferable that one or more selected from the group consisting of oil-soluble dyes be mainly used as the dye used in the present invention.

The amount of the coloring agent added to the thermoplastic resin layer (A-2) that functions as a supportive substrate varies with a selected type of the coloring agent, thickness or color tone of the intended thermoforming sheet, etc. However, the amount of the coloring agent added thereto is preferably within a range of 0.1% to 20% by mass (mass percentage), and more preferably within a range of 0.5% to 15% by mass with respect to the resins that constitute the layer (A-2) to attain concealment of the color tone or the background color and to maintain impact strength. If the amount of the coloring agent is over 20% by mass with respect to the resins, then the impact strength will decrease. If the amount of the coloring agent is less than 0.1 % by mass, then, the concealment of the color tone or the background color will be insufficient.

### (Additives in the thermoplastic resin layer (A-2) that functions as a supportive substrate)

Furthermore, additives such as a plasticizer, antioxidant, ultraviolet absorbing agent, or antistatic agent, flame retardant or lubricant may be added to the thermoplastic resin layer (A-2) that functions as a supportive substrate as long as the impact strength or formability is not impaired. These additives may be used alone or in combination of two or more types.

### (Decorative protective layer)

One or more decoration protective layers may be provided between the thermoplastic resin film layer (A-1) and the decorative layer (B) in order to improve heat resistance, solvent resistance, design properties, weatherability, among others. In particular, when the decorative layer (B) is made of the high brilliant ink, it is desirable that the decoration protective layer described below be provided as an ink protective layer. The type of resin that can be used in the decoration protective layer is not particularly limited as long as expansibility of the thermoforming sheet is not deteriorated. However, an acrylic resin is preferable in terms of ease of adjustment of crosslink density, weatherability, its adhesiveness to the thermoplastic resin film layer (A-1), etc. The crosslinking system of the resin is not particularly limited. In the case of an acrylic resin, UV curing, EB curing, hydroxyl group-containing copolymer/isocyanate curing, silanol/water curing, epoxy/amine curing, etc. are available. In particular, the hydroxyl group-containing copolymer/isocyanate curing is preferable in terms of ease of adjustment of crosslink density, weatherability, reaction speed, no presence of reaction byproduct, production cost, etc.

Moreover, in order to impart design properties to the decoration protective layer, a coloring agent may be added to the decoration protective layer to form a coloring layer. In this case, the amount of the coloring agent added thereto will vary with the selected type of coloring agent, required color tone, thickness of the decoration protective layer, etc. However, it is preferable that all-light transmittance of the decoration protective layer be 20% or more, such that the decorative layer (B) is not concealed. In particular, it is more preferable that the light transmittance be 40% or more. A pigment is preferable with regard to coloring agent that can be added to the decoration protective layer. The pigment used therein is not particularly limited, and general pigments such as a coloring pigment, metallic pigment, interference color pigment, fluorescent pigment, extender pigment, or rust-preventive pigment can be used.

The above coloring pigment, for example, includes an organic pigment such as quinacridone pigment (quinacridone red, etc.), an azo pigment (pigment red, etc.) or phthalocyanine pigment (phthalocyanine blue, phthalocyanine green, or perylene red, etc.); and an inorganic pigment such as a titanium oxide or carbon black. The metallic pigment, for example, includes aluminum powder, nickel powder, copper powder, brass powder, or chromium powder. The interference color pigment, for example, includes pearl mica powder having pearl-like luster, or colored pearl mica powder having pearl-like luster.

The examples of the fluorescent pigments include organic pigments such as a quinacridone pigment, anthraquinone pigment, perylene pigment, perynone pigment, diketopyrrolopyrrole pigment, isoindolinone pigment, condensed azo pigment, benzimidazolone pigment, monoazo pigment, insoluble azo pigment, naphthol pigment, flavanthrone pigment, anthrapyrimidine pigment, quinophthalone pigment, pyranthrone pigment, pyrazolone pigment, thioindigo pigment, anthanthrone pigment, dioxazine pigment, phthalocyanine pigment, or indanthrone pigment; metal complexes such as a nickel dioxine yellow or copper azomethine yellow; metal oxides such as a titanium oxide, iron oxide or zinc oxide; metal salts such as barium sulfate, or calcium carbonate; or inorganic pigments such as carbon black, aluminum, or mica.

### (Lamination of the laminate sheet)

In order to join the decorative layer (B) or the other ink layer to the thermoplastic resin layer (A-2) that functions as a supportive substrate, it is preferable that they be adhered through an adhesive layer or a cohesive layer.

In the adhering method according to the adhesive layer, the dry lamination method, the wet lamination method, or the hot melt lamination method, among others, can be applied using a general solvent-type adhesive. The examples of the adhesive that is included in the adhesive layer include a thermosetting resin adhesive such as a typical phenol resin-based adhesive, a resorcinol resin-based adhesive, a phenol-resorcinol resin-based adhesive, an epoxy resin-based adhesive, a urea resin-based adhesive, a polyurethane-based adhesive, and a polyaromatic-based adhesive; a reactive type adhesive using an ethylene-unsaturated carboxylic acid copolymer; a thermoplastic resin-based adhesive such as a vinyl acetate resin, an acryl resin, an ethylene-vinyl acetate resin, polyvinyl alcohol, polyvinyl acetal, vinyl chloride, nylon, or a cyanoacrylate resin; a rubber-based adhesive such as a chloroprene-based adhesive, a nitrile rubber-based adhesive, a SBR-based adhesive, or a natural rubber-based adheisve; or the like. In particular, the acrylic urethane resin-based adhesive is preferable because its adhesiveness to an acryl resin and a polypropylene-based resin is excellent, and its flexibility or stretchability is excellent during the thermoforming such as vacuum forming or the matched mold forming.

A gravure coater, gravure reverse coater, flexo coater, blanket coater, roll coater, knife coater, air knife coater, kiss touch coater, kiss touch reverse coater, comma coater, comma reverse coater, microreverse coater or the like can be used as a system for coating the adhesive. In order to obtain sufficient adhesiveness and favorable drying properties, the amount of the adhesive applied is preferably in a range of 0.1 to 30 g/m², and more preferably 2 to 10 g/m². If the coating amount of the adhesive is too small, then, its adhesive strength becomes weak. If the coating amount is too large, then, its drying properties become inferior. The thickness of the adhesive layer is preferably in a range of 0.1 µm to 30 µm, more preferably 1 µm to 20 µm, and most preferably 2 µm to 10 µm.

In order to improve affinity to the adhesive that forms the adhesive layer, the surface of the support base resin layer 5 on which the adhesive is applied is preferably subjected to surface treatment such as the plasma treatment, the corona treatment, the frame treatment, the electronic ray radiation treatment, the roughing treatment, or the ozone treatment. Furthermore, the dry plating treatment such as vacuum deposition, sputtering, and ion plating may be performed.

A cohesive layer can be provided instead of the adhesive layer. Preferable examples of cohesive agents that form the cohesive layer include an acryl-based cohesive agent, a rubber-based cohesive agent, a polyalkyl silicon-based cohesive agent, a urethane-based cohesive agent, or a polyester resin-based cohesive agent.

### (Surface protective layer)

In order to impart functions such as design properties, abrasion resistance, mar-resistance, weatherability, stain resistance, water resistance, chemical resistance, or heat resistance onto the front face during forming, one or more top coat layers that is transparent, semi-transparent or colored-transparent can be provided in the thermoforming sheet used in the present invention. Lacquer-type agents; the crosslinking type agents based on an isocyanate, epoxy, among others; UV-crosslinking type agents; or EB-crosslinking type agents are preferably used as the top coat agent as long as the spreadability of the thermoforming sheet is not impaired.

### [Examples]

Hereinafter, the present invention will be described with reference to Examples. However, the present invention is not limited to Examples. In addition, physical properties shown in Examples and Comparative Examples were evaluated based on the measurement methods or test methods described below. Unless otherwise specified, "part" and "%" are based on mass.

### (Example 1)

The production method of the laminate sheets and the matched mold forming method are described below.

### (A-1) thermoplastic resin film layer

As a transparent or semi-transparent thermoplastic resin film layer (A-1), a rubber-modified PMMA film (product name: "Technolloy S-001" produced by Sumitomo Chemical Co., Ltd., Tg = 125°C) whose haze is 0.1%, and whose thickness is 125 µm was used.

### (A-1/B intermediate layer) Decoration protective layer

In order to improve the adherence between the thermoplastic resin film layer (A-1) and the decorative layer (B), 8 parts of an isocyanurate-ring-containing polyisocyanate (product name: "BURNOCK DN-981" produced by Dainippon and Ink Chemicals, Inc., solid content: 75%, solvent: ethyl acetate, the number of functional group: 3, NCO concentration: 14%) was mixed into a mixture solution of 46 parts of an acrylic polyol resin (product name: "6KW-032E" produced by Dainippon and Ink Chemicals, Inc., solid content: 38%, solvent: ethyl acetate, hydroxyl value: 30 KOHmg/g), and 46 parts of 4-methyl-2-pentanone (total amount of contents: 100 parts) to prepare a decoration protective layer solution (primer).

### (B) decorative layer

10 parts of aluminum flakes (thickness: 0.04 µm, size in the planar direction: 5-25 µm); 37.25 parts of ethyl acetate; 30 parts of methyl ethyl ketone; 31.5 parts of isopropyl alcohol; and 1.25 parts of nitrocellulose were mixed (total amount: 110 parts) to prepare an aluminum flake slurry.

30 parts of the obtained aluminum flake slurry; 3 parts of a carboxylate-containing vinyl chloride-vinyl acetate resin (product name: "Vinylite VMCH" produced by UCC corporation) as a binding resin; 8 parts of a urethane resin ("polyurethane 2593" produced by Arakawa Chemical Industries, Ltd., non-volatile content: 32%); 23 parts of ethyl acetate; 26 parts of 4-methyl-2-pentanone; and 10 parts of isopropyl alcohol were mixed (total amount: 100 parts) were mixed to prepare a decorative layer solution (high brilliant ink) in which the concentration of aluminum flakes was 35% by mass with respect to the non-volatile content.

### (B/A-2 intermediate layer) adhesive

15 parts of an aromatic polyester polyol resin (product name "LX-703VL" produced by Dainippon Ink and Chemicals, Inc.) as a main component; 1 part of an aliphatic polyisocyanate (product name "KR-90" produced by Dainippon Ink and Chemicals, Inc.) as a curing agent; and 18 parts of ethyl acetate as a diluent were mixed (total amount: 34 parts), and a polyester urethane-based adhesive was prepared to adhere the thermoplastic resin film layer (A-1) having the decorative layer (B) to the thermoplastic resin layer (A-2) that became a supportive substrate.

### (A-2) thermoplastic resin layer that functions as a supportive substrate

A first layer (C-1) that mainly includes a propylene-ethylene random copolymer (product name "FS3611" produced by Sumitomo Chemical Co., Ltd.); and a second layer (C-2) that mainly includes a propylene-butene random copolymer (product name "SP7834" produced by Sumitomo Chemical Co., Ltd.) were laminated to form a two-type/two-layer sheet, and this was used as the thermoplastic resin layer (A-2) that became a supportive substrate.

In detail, 80 parts of "FS361"; 10 parts of a low-density polyethylene (product name "F200" produced by Sumitomo Chemical Co., Ltd.); 10 parts of an ethylene propylene rubber (product name "P-0480" produced by Mitsui Chemicals, Inc.); and 2 parts of a black master batch (product name "Peony Black F31246" produced by Dainippon Ink and Chemicals, Inc., a low-density polyethylene / carbon black =60 / 40) were dry-blended in a drum tumbler (total amount: 102 parts) to produce a resin used for the layer (C-1).

Also, 2 parts of "Peony Black F31246" were dry-blended with 35 parts of "SP7834"; 10 parts of "F200"; 15 parts of "P-0480"; and 40 parts of a talc master batch (talc whose average particle size is 1.8 µm / "SP7834" = 60/40) (total amount: 100 parts) in a drum tumbler to produce a resin used for the layer (C-2). The talc content included in the layer (C-2) was 24% by mass.

Next, the above-obtained resin materials used for two types of layers (C-1) and (C-2) were made molten at 210°C with single screw extruders of 50 mm ϕ and 65 mm ϕ, respectively. Then, the two layers (C-1) and (C-2) were laminated by using a feed block produced by Cloeren Co., such that the layer structure ratio became 30/70, this was subjected to extrusion molding by loading it to a T die to form a sheet, and this was immediately cooled on a metal roll that was adjusted to 40°C, thereby producing a sheet, whose thickness was 0.30 mm, for the supportive substrate resin layer.

In addition, the laminate (A-2) including the layers (C-1) and (C-2) did not show a maximum value of tan δ at 0°C or more in the DMA measurement.

### (Lamination method for forming a sheet)

The above-described solution used for the decoration protective layer (A-1/B intermediate layer) was coated onto the above rubber-modified PMMA film (A-1) by using a micro gravure coater, this was dried, such that the thickness of the dried film was 2.0 µm, and further aged for three days at 50°C. Next, the above-described high brilliant ink was coated onto the decoration protective layer by using a gravure coater to form a decorative layer (B), and this was dried so that the thickness of the dried film was 2.0 µm. Furthermore, the adhering surface (the layer (C-1) that mainly includes the propylene-ethylene random copolymer) of the sheet for the thermoplastic resin layer (A-2), which functions as a supportive substrate, was subjected to the corona treatment, such that the wetting index became 40 dyne/cm. After the treatment, the adhesive (B/A-2 intermediate layer) was coated by using a micro gravure coater such that the thickness of the dried film became 5 µm, and this was dried. This was adhered to the high brilliant ink-coated surface of the above rubber-modified PMMA film, and the combined sheet was subjected to an aging treatment at 50°C for three days to obtain a thermoforming laminate sheet (S-1). The 20° gloss value (measurement angle of 20°) of the sheet (S-1) was 1050%.

### (Measurement method of 20° gloss value)

In connection with the measurement, the 20° gloss value was measured by using "Micro-TRI-gloss" (manufactured by BYK Gardner, Co.) based on JIS 28741 (the values shown in Examples and Comparative Examples below were measured in the same manner).

### (Matched mold forming method)

### (Evaluation mold)

A trapezoidally-shaped male mold 10 was used. In the male mold 10, the horizontal plane 11a and the box 12 forms a rectangular perimeter of 183 mm × 204 mm (area of 373 cm²) (the perimeter of the inclined plane 11b of the male mold is 113 mm × 158 mm); the top plane 11c was a rectangle of 51 mm × 66 mm; the height between the horizontal plane 11a and the top plane 11c is 50 mm; the inclination angles of the inclined planes 11b were 35°, 55 °, 60 °, and 70°, respectively; the junction regions between the top plane 11c and the inclined planes 11b have a corner radius of 0.5 mmR, 1 mmR, 5 mmR, and 3 mmR, respectively; the junction regions between the inclined planes 11b have a corner radius of 5 mmR; and the junction regions between the inclined planes 11b and the horizontal plane 11a have a corner radius of 0.5 mmR. Two types of female molds were designed such that the clearance between the female mold and the male mold was 400 µm or 200 µm when the female mold and the male mold were jointed. In this example, the former female mold was used for evaluating formability. Furthermore, a vacuum port whose diameter was 0.5 mm was provided in the junction region between the horizontal plane 11a and the inclined plane 11b of the male mold, and an air vent port whose diameter was 0.5 mm was provided in the junction region between the bottom plane 21c and the inclined plane 21b.

With regard to the frame clamps 14 and 24, frame clamps whose inside perimeter was a rectangle of 190 mm × 210 mm, whose width was 10 mm, and which did not have a flange were used, and the joining parts of the frame clamp for the female mold and the frame clamp for the male mold were shaped into the portions 32 and 31 shown in Figure 7. In addition, the area of the clamping portion is 84 cm².

With regard to the steel material used for the mold and the frame clamps, a hard aluminum alloy (product name "Alumigo HARD" produced by Daido Amistar Co., Ltd.) was used, and the frame clamps were produced by using a vertical machining center "NV 5000" (product name) produced by Mori Seiki Co., Ltd.

With respect to a system of actuating the frame clamps, four sets of movable cylinders 16 and 26 were used for actuating the frame clamps. Specifically, air cylinders "Jig Cylinder C series CDA 50 × 50" (product name, cylinder diameter: 50 mm, Stroke: 50 mm, rod (16a and 17a) diameter: 20 mm) produced by Koganei Corporation were used.

The mass of the entire female mold or the entire male mold, including each movable frame clamp and air cylinders was about 25 kg (each weight was about 25 kgf).

### (Forming conditions)

In the matched mold forming of the present Example, a small vacuum forming machine "FE38PH" produced by Hermes Co., Ltd. was used. The female mold and the movable frame clamp for the female mold were attached to a plug actuating device (upper side), and the male mold and the movable frame clamp for the male mold were attached to a mold actuating device (down side), and the matched mold forming was conducted based on the following procedures.
(1) fixing the laminate sheet (S-1) with clamps attached to the forming machine such that the thermoplastic resin film layer (A-1)-side of the sheet faces upward;
(2) moving an upper heater (not shown in Figures) over the sheet (S-1) (a down heater is not used);
(3) heating the sheet (S-1) until the sheet reaches a predetermined temperature;
(4) evacuating the heater;
(5) moving downward the female mold 20 fixed onto the fixing plate 23, and moving upward the male mold 10 fixed onto the fixing plate 13;
(6) clamping the sheet 1 with the movable frame clamps 14 and 24 for molds, followed by the downward movement of the female mold 20 and the upward movement of the male mold 10, and then, mold-clamping the sheet with the female mold 20 and the male mold 10 while clamping the sheet with the clamps to produce a three-dimensionally shaped formed product;
(7) holding the sheet placed between the female mold 20 and the male mold 10 for one minute;
(8) moving the female mold 20 upward, and moving the male mold 10 downward, and then, cooling the three-dimensionally shaped formed product with air for five seconds; and
(9) opening the clamps of the forming machine.

Based on the above steps (1) to (9), the matched mold formed article was obtained.

Specifically, the heater temperature was 370°C; the space between the sheet and the heater was 130 mm; the heating time was twelve seconds; and the temperature of the sheet was 115°C when forming was started. In addition, the temperature of the sheet was measured by using an infrared radiation thermometer "IT2-80" (emittance ε = 0.95) produced by Keyence Corporation, and, specifically, the temperature around a portion of the sheet over the center of the mold was measured at the down side of the sheet (at the thermoplastic resin layer (A-2)-side of the sheet). The maximum temperature during heating the sheet with the heater was considered as a forming temperature.

Moreover, by way of using mold temperature controlling devices, the temperature of the female mold was adjusted to 95 °C and the temperature of the male mold was adjusted to 75 °C. Furthermore, the frame clamp which did not have a flange (Figure 5) was used as the movable frame clamp for the female mold; the downward pressures of four air cylinders (50 mm ϕ) for actuating the frame clamp were set each to 1 kgf/cm² {about 0.1 MPa} (thrust: about 80 kgf {about 800 N}); the upward pressures of the four air cylinders (50 mm ϕ) for actuating the male mold were each set to 2 kgf/cm² {about 0.2 MPa} (thrust: about 160 kgf {about 1600 N}); the downward pressure of the air cylinder (104 mm ϕ) for actuating the female mold, and the upward pressure of the air cylinder (112 mm ϕ) for actuating the male mold were set to 5 kgf/cm² {about 0.5 MPa} (thrust: about 425 kgf {about 4250 N} and about 492 kgf {about 4250 N}); and the forming method A (Figure 1) wherein the sheet fixed with movable frame clamps was first pressed to the female mold was used. In addition, the clamping force to fix the sheet with frame clamps was about 80 kgf {about 800 N} (about 0.95 kgf/cm² {about 95 kPa} as a stress), and the mold-clamping force of the female mold and the male mold during forming was 290 kgf [i.e. 425 kgf (the thrust of the female mold) + 25 kgf (the weight of the female mold) - 160 kgf (the thrust of the frame clamp for the male mold) = 290 kgf] {about 2.9kN} (about 0.78 kgf/cm² {about 78kN} as a stress).

### (Method of evaluating on forming)

As the evaluation method, whether the formed articles obtained by the above-described method were acceptable or not was determined by way of visually examining whether wrinkles were generated thereon.

### [Evaluation basis]

Excellent: no generation of wrinkles;
Good: wrinkles less than 3 mm were generated on a climbing portion of the formed article; and
Poor: wrinkles more than 3 mm were generated on the formed article, or other exterior defects were present (For example, a mark caused by cooling, so-called "chilled mark", a mark from pressure or a vacuum port mark may be mentioned).

### (Method of evaluating reproducibility of the molded shape of the formed article)

With regard to the method of evaluating reproducibility of the molded shape of the formed article obtained by way of the above-described method, the reproducibility of a corner radius "R" was evaluated with respect to points of 3 mmR of four corners of the top plane of the formed article.

### [Evaluation basis]

Excellent: 80% or more of the R reproducibility;
Good: 60% to less than 80% of the R reproducibility;
Fair: 40% to less than 60% of the R reproducibility; and
Poor: less than 40% of the R reproducibility.

### (Method of evaluating sheen of the formed article)

The 20° gloss value was measured with respect to portions, where the expansion rate was 110% or 150%, of the top portion or the inclined portion of the formed product, and the gloss retention was calculated based on change of the gloss values before and after forming. The expansion rate was calculated based on the rate of change in thickness.

### [Evaluation basis]

Excellent: 80% or more of the gloss retention;
Good: 60% to less than 80% of the gloss retention;
Fair: 40% to less than 60% of the gloss retention; and
Poor: less than 40% of the gloss retention.

### (Evaluation results)

The formed product (M-1) was evaluated based on the above evaluation methods. As a result, the evaluation on forming was "excellent"; the reproducibility of the molded shape was "good"; the 20° gloss value (a portion of the expansion rate 110%) was 850%, its gloss retention was 81 %, and the resulting gloss evaluation (a portion of the expansion rate 110%) was "excellent"; and the 20° gloss value (a portion of the expansion rate 150%) was 750%, its gloss retention was 71 %, and the resulting gloss evaluation (a portion of the expansion rate 150%) was "good".

The above results revealed that the formed product (M-1) of Example 1 had excellent reproducibility of the molded shape and metallic luster.

### (Example 1a)

Except that a black grid pattern of 1 mm intervals was printed on the surface of the decorative layer (B) of the thermoplastic resin film layer (A-1) in advance, a formed product (M-1a) was obtained in the same manner as Example 1. A distortion of the grid pattern was hardly observed on the portion of the expansion rate 110%. The grid pattern present on the portion of the expansion rate 150% was somewhat deformed in whole, but the ruled lines were hardly distorted.

### (Example 2)

As a frame clamp for the female mold, the frame clamp 24 having the flange 27 shown in Figure 6 was used. The downward pressures of four air cylinders for actuating the frame clamp were each set to 0.2 MPa; and the upward pressures of the four air cylinders for actuating the male mold were each set to 0.1 MPa; and the forming method B (Figure 3) wherein the sheet fixed with movable frame clamps after heating was first pressed onto the male mold was used. Except for these conditions, a forming laminate sheet (S-2) and a formed product (M-2) were obtained in the same manner as Example 1. In addition, the clamping force to fix the sheet with frame clamps was about about 800 N (about 95 kPa as a stress), and the mold-clamping force of the female mold and the male mold during forming was about 2.9kN (about 85kPa as a stress), and the perimeter of the horizontal plane 21 a is a rectangle of 175 mm × 196 mm (the area: 343 cm²). With regard to the evaluation results of the formed product (M-2), the evaluation on forming was "excellent"; the reproducibility of the molded shape was "excellent"; the 20° gloss value (a portion of the expansion rate 110%) was 800%, its gloss retention was 76%, and the resulting gloss evaluation (a portion of the expansion rate 110%) was "good". Furthermore, the 20° gloss value (a portion of the expansion rate 150%) was 650%, its gloss retention was 62%, and the resulting gloss evaluation (a portion of the expansion rate 150%) was "good".

### (Example 2a)

Except that a black grid pattern of 1 mm intervals was printed on the surface of the decorative layer (B) of the thermoplastic resin film layer (A-1) in advance, a formed product (M-2a) was obtained in the same manner as Example 2. A distortion of the grid pattern was hardly observed on the portion of the expansion rate 110%. On the portion of the expansion rate 150%, the ruled lines were slightly distorted.

### (Example 3)

The thickness of the thermoplastic resin film layer (A-1) (Tg = 125°C) was 75 µm; the thermoplastic resin layer (A-2) that functions a supportive substrate was a monolayer sheet 200 µm thick formed by using a transparent ABS resin (methyl methacrylate-acrylnitrile-butadiene-styrene copolymer, product name "SXH-290" produced by NIPPON A&L INC., Tg = 115 °C), and by only using a single screw extruder of 65 mm ϕ; the high brilliant ink was coated on the surface where the adhesive was supposed to be coated in the above-described lamination method. Except for these conditions, a forming laminate sheet (S-3) was obtained in the same manner as Example 1. The 20° gloss value of the sheet (S-3) was 950%. Further, a formed product (M-3) was obtained in the same manner as Example 1 except that a used female mold was designed to have clearance of 200 µm.

With regard to the evaluation results of the formed product (M-3), the evaluation on forming was "excellent"; the reproducibility of the molded shape was "excellent"; the 20° gloss value (a portion of the expansion rate 110%) was 800%, its gloss retention was 84%, and the resulting gloss evaluation (a portion of the expansion rate 110%) was "excellent". Furthermore, the 20° gloss value (a portion of the expansion rate 150%) was 600%, its gloss retention was 63%, and the resulting gloss evaluation (a portion of the expansion rate 150%) was "good".

### (Example 4)

A forming laminate sheet (S-4) was obtained in the same manner as Example 1 except that an aluminum film was laminated on the thermoplastic resin film layer (A-1) as a decorative a layer (B) by way of the vacuum evaporation method instead of using the above primer and the high brilliant ink. The 20° gloss value of the sheet (S-4) was 1450%. Further, a formed product (M-4) was obtained in the same manner as Example 1.

With regard to the evaluation results of the formed product (M-4), the evaluation on forming was "excellent"; the reproducibility of the molded shape was "good"; the 20° gloss value (a portion of the expansion rate 110%) was 1350%, its gloss retention was 93%, and the resulting gloss evaluation (a portion of the expansion rate 110%) was "excellent". Furthermore, the 20° gloss value (a portion of the expansion rate 150%) was 650%, its gloss retention was 45%, and the resulting gloss evaluation (a portion of the expansion rate 150%) was "fair".

### (Example 5)

Instead of using the primer and the high brilliant ink, in advance, a black grid pattern of 1 mm intervals was printed at the first print and a white solid pattern was printed at the second and third print on the surface of the decorative layer (B) of the thermoplastic resin film layer (A-1) by way of the gravure printing method using inks for gravure printing (product name "UNIVURE NT" produced by Dainippon and Ink Chemicals, Inc.) to form a decorative layer. Except for this procedure, a forming laminate sheet (S-5) was obtained in the same manner as Example 3. Further, a formed product (M-5) was obtained in the same manner as Example 1.

With regard to the evaluation results of the formed product (M-5), the evaluation on forming was "excellent", and the reproducibility of the molded shape was "excellent". On the portion of the expansion rate 110%, the grid pattern was hardly distorted. The grid pattern present on the portion of the expansion rate 150% was somewhat deformed in whole, but the ruled lines were hardly distorted. Furthermore, there was no serious difference between the portions of the expansion rates 110% and 150% in terms of whiteness.

### (Example 6)

Except that the sheet temperature was 100°C when forming was started, a formed product (M-6) was obtained in the same manner as Example 1.

With regard to the evaluation results of the formed product (M-6), the evaluation on forming was "excellent"; the reproducibility of the molded shape was "good"; the 20° gloss value (a portion of the expansion rate 110%) was 1000%, its gloss retention was 95%, and the resulting gloss evaluation (a portion of the expansion rate 110%) was "excellent". Furthermore, the 20° gloss value (a portion of the expansion rate 150%) was 850%, its gloss retention was 81 %, and the resulting gloss evaluation (a portion of the expansion rate 150%) was "excellent".

### (Example 7)

Except that the sheet temperature was 130°C when forming was started, a formed product (M-7) was obtained in the same manner as Example 1.

With regard to the evaluation results of the formed product (M-7), the evaluation on forming was "excellent"; the reproducibility of the molded shape was "excellent"; the 20° gloss value (a portion of the expansion rate 110%) was 650%, its gloss retention was 62%, and the resulting gloss evaluation (a portion of the expansion rate 110%) was "good". Furthermore, the 20° gloss value (a portion of the expansion rate 150%) was 600%, its gloss retention was 57%, and the resulting gloss evaluation (a portion of the expansion rate 150%) was "fair".

### (Comparative Example 1)

Except that the forming temperature was set to 140°C, a formed product (M-1') was obtained in the same manner as Example 1. The comparative formed product (M-1') was evaluated by way of the same method as Example 1. As a result, the evaluation on forming was "excellent"; the reproducibility of the molded shape was "excellent"; the 20° gloss value (a portion of the expansion rate 110%) was 400%, its gloss retention was 38%, and the resulting gloss evaluation (a portion of the expansion rate 110%) was "poor". Moreover, the 20° gloss value (a portion of the expansion rate 150%) was 250%, its gloss retention was 24%, and the resulting gloss evaluation (a portion of the expansion rate 150%) was "poor". Furthermore, a mark of the air vent port was present on the junction area between the top plane and the inclined plane of the formed product (M-1'), a mark caused from the pressure of the female mold and the male mold when the sheet was mold-clamped was present on a portion of the top plane.

### (Comparative Example 1a)

Except that a black grid pattern of 1 mm intervals was printed on the surface of the decorative layer (B) of the thermoplastic resin film layer (A-1) in advance, a comparative formed product (M-1a') was obtained in the same manner as Comparative Example 1. A distortion of the ruled lines was hardly observed on the portion of the expansion rate 110%, but the grid pattern was slightly deformed. The ruled lines were obviously distorted on the portion of the expansion rate 150%.

### (Comparative Example 2)

The sheet identical to that of Example 1 was subjected to a vacuum forming only using the male mold without movable frame clamps. The forming temperature was set to 140°C whereby a comparative formed product (M-2') was obtained. The comparative formed product (M-2') was evaluated by way of the same method as Example 1. As a result, the evaluation on forming was "good"; the reproducibility of the molded shape was "good"; the 20° gloss value (a portion of the expansion rate 110%) was 300%, its gloss retention was 29%, and the resulting gloss evaluation (a portion of the expansion rate 110%) was "poor". Moreover, the 20° gloss value (a portion of the expansion rate 150%) was 200%, its gloss retention was 19%, and the resulting gloss evaluation (a portion of the expansion rate 150%) was "poor".

### (Comparative Example 2a)

Except that a black grid pattern of 1 mm intervals was printed on the surface of the decorative layer (B) of the thermoplastic resin film layer (A-1) in advance, a comparative formed product (M-2a') was obtained in the same manner as Comparative Example 2. Following upon a distortion of the ruled lines, a distortion of the grid pattern was recognized on the portion of the expansion rate 110%. It was evident that an irregular distortion of the ruled lines was present on the portion of the expansion rate 150%.

### (Comparative Example 3)

The sheet identical to Example 1 was subjected to a matched mold forming using the female mold and the male mold without movable frame clamps. The forming temperature was set to 115°C in the same way as Example 1 whereby a comparative formed product (M-3') was obtained. The comparative formed product (M-3') was evaluated by way of the same method as Example 1. As a result, the evaluation on forming was "poor"; the reproducibility of the molded shape was "fair"; the 20° gloss value (a portion of the expansion rate 110%) was 800%, its gloss retention was 76%, and the resulting gloss evaluation (a portion of the expansion rate 110%) was "good". Moreover, the 20° gloss value (a portion of the expansion rate 150%) was 500%, its gloss retention was 48%, and the resulting gloss evaluation (a portion of the expansion rate 150%) was "fair". Furthermore, owing to dragging of the sheet into the molds during forming, a part of the sheet slipped out of clamps of the forming machine, and chilled marks (a mark caused by cooling) owing to the contact of the sheet against the female mold were generated on all inclined planes of the formed product.

### (Comparative Example 4)

The sheet identical to Example 1 was subjected to the matched mold forming in the same manner as Example 1 except that the movable frame clamps of the present invention were taken off from air cylinders, and only four rods (diameter: 20 mm) of air cylinders were actuated, thereby obtaining a comparative formed product (M-4'). The comparative formed product (M-4') was evaluated by way of the same method as Example 1. As a result, the evaluation on forming was "poor"; the reproducibility of the molded shape was "fair"; the 20° gloss value (a portion of the expansion rate 110%) was 800%, its gloss retention was 76%, and the resulting gloss evaluation (a portion of the expansion rate 110%) was "good". Moreover, the 20° gloss value (a portion of the expansion rate 150%) was 500%, its gloss retention was 48%, and the resulting gloss evaluation (a portion of the expansion rate 150%) was "fair". Furthermore, owing to dragging of the sheet into the molds during forming, a part of the sheet slipped out of clamps of the forming machine, and chilled marks (a mark caused by cooling) owing to the contact of the sheet against the female mold were generated on all inclined planes of the formed product.

### (Comparative Example 5)

The sheet identical to Example 1 was subjected to the matched mold forming in the same manner as Example 1 except that the short sides of the movable frame clamps 14 and 24 were removed whereby only two side of the sheet could be fixed, thereby producing a comparative formed product (M-5'). The comparative formed product (M-5') was evaluated by way of the same method as Example 1. As a result, the evaluation on forming was "poor"; the reproducibility of the molded shape was "fair"; the 20° gloss value (a portion of the expansion rate 110%) was 800%, its gloss retention was 76%, and the resulting gloss evaluation (a portion of the expansion rate 110%) was "good". Moreover, the 20° gloss value (a portion of the expansion rate 150%) was 550%, its gloss retention was 52%, and the resulting gloss evaluation (a portion of the expansion rate 150%) was "fair". Furthermore, a part of the sheet which was not clamped was torn, and chilled marks (a mark caused by cooling) owing to the contact of the sheet against the female mold were generated on two inclined planes that were located at the sides of the sheet which were not clamped during forming.

### (Comparative Example 6)

A comparative formed product (M-6') was obtained in the same manner as Comparative Example 5 except that the forming temperature was 140 °C. The comparative formed product (M-6') was evaluated by way of the same method as Example 5. As a result, the evaluation on forming was "excellent"; and the reproducibility of the molded shape was "excellent". A distortion of the ruled lines was hardly observed on the portion of the expansion rate 110%, but the grid pattern was slightly deformed. The ruled lines were obviously distorted on the portion of the expansion rate 150%. Moreover, the background was visible on that of the portion of the expansion rate 150%, and the degree of whiteness was obviously different from that in the portion of the expansion rate 110%. Furthermore, chilled marks (a mark caused by cooling) owing to the contact of the sheet against the male mold were generated on portions of inclined planes adjacent to the top plane of the formed product (M-6').

### (Summary)

The conditions for conducting Examples and Comparative Examples, and the evaluation results are summarized in brief in Tables 1 and 2.

**Table 1**

| | | Example 1 | Example 2 | Example 3 | Example 4 | Example 5 | Example 6 | Example 7 |
|---|---|---|---|---|---|---|---|---|
| Thickness of layer (A-1) | | 125 µm | 125 µm | 75 µm | 125 µm | 75 µm | 125 µm | 125 µm |
| Layer (B) | | High brilliant ink | High brilliant ink | High brilliant ink | Vacuum evaporated film | Grid pattern printed | High brilliant ink | High brilliant ink |
| Layer (A-2) | | Two type/two layer sheet | Two type/two layer sheet | Monolayer sheet | Two type/two layer sheet | Monolayer sheet | Two type/two layer sheet | Two type/two layer sheet |
| Thickness of layer (A-2) | | 300 µm | 300 µm | 200 µm | 300 µm | 200 µm | 300 µm | 300 µm |
| Tg of layer (A- 1) | | 125°C | 125°C | 125°C | 125°C | 125°C | 125°C | 125°C |
| Tg of layer (A-2) | | None | None | 115°C | None | 115°C | None | None |
| 20° gloss value before forming | | 1050% | 1050% | 950% | 1450% | - | 1050% | 1050% |
| Forming method | | Matched mold (Forming method A) | Matched mold (Forming method B) | Matched mold (Forming method A) | Matched mold (Forming method A) | Matched mold (Formin method A) | Matched mold (Forming method A) | Matched mold (Forming method A) |
| Movable frame clamps | | Present | Present | Present | Present | Present | Present | Present |
| Forming temperature | | 115°C | 115°C | 115°C | 115°C | 115°C | 100°C | 130°C |
| Clearance between molds | | 400 µm | 400 µm | 200 µm | 400 µm | 200 µm | 400 µm | 400 µm |
| Evaluation on forming | | Excellent | Excellent | Excellent | Excellent | Excellent | Excellent | Excellent |
| Evaluation of reproducibility of the molded shape | | Good | Excellent | Excellent | Good | Excellent | Good | Excellent |
| Portion of expansion rate 110% | 20° gloss value | 850% | 800% | 800% | 1350% | - | 1000% | 650% |
| | Gloss retention | 81% | 76% | 84% | 93% | - | 95% | 62% |
| | Gloss evaluation | Excellent | Good | Excellent | Excellent | - | Excellent | Good |
| Portion of expansion rate 150% | 20° gloss value | 750% | 650% | 600% | 650% | - | 850% | 600% |
| | Gloss retention | 71% | 62% | 63% | 45% | - | 81% | 57% |
| | Gloss evaluation | Good | Good | Good | Fair | - | Excellent | Fair |

| | | | | | | | | |
|---|---|---|---|---|---|---|---|---|
| * Layer (A-1): thermoplastic resin film layer; Layer (B): decorative layer; and Layer (A -2): supportive substrate resin layer | | | | | | | | |

**Table 2**

| | | Comparative Example 1 | Comparative Example 2 | Comparative Example 3 | Comparative Example 4 | Comparative Example 5 | Comparative Example 6 |
|---|---|---|---|---|---|---|---|
| Thickness of layer (A-1) | | 125 µm | 125 µm | 125 µm | 125 µm | 125 µm | 75 µm |
| Layer (B) | | High brilliant ink | High brilliant ink | High brilliant ink | High brilliant ink | High brilliant ink | Grid pattern printed |
| Layer (A-2) | | Two type/two layer sheet | Two type/two layer sheet | Two type/two layer sheet | Two type/two layer sheet | Two type/two layer sheet | Monolayer sheet |
| Thickness of layer (A-2) | | 300 µm | 300 µm | 300 µm | 300 µm | 300 µm | 200 µm |
| Tg of layer (A-1) | | 125°C | 125°C | 125°C | 125°C | 125°C | 125°C |
| Tg of layer (A-2) | | None | None | None | None | None | 115°C |
| 20° gloss value before forming | | 1050% | 1050% | 1050% | 1050% | 1050% | - |
| Forming method | | Matched mold (Forming method A) | Vacuum forming (Only male mold) | Matched mold (Conventional method) | Matched mold (Partially fixing method 1) | Matched mold (Partially fixing method 2) | Matched mold (Forming method A) |
| Movable frame clamps | | Present | None | None | Pin-fixing | Two sides-fixed | Present |
| Forming temperature | | 140°C | 140°C | 115°C | 115°C | 115°C | 140°C |
| Clearance between molds | | 400 µm | - | 400 µm | 400 µm | 400 µm | 200 µm |
| Evaluation on forming | | Excellent | Good | Bad | Bad | Bad | Excellent |
| Evaluation of reproducibility of the molded shape | | Excellent | Good | Fair | Fair | Fair | Excellent |
| Portion of expansi on rate 110% | 20° gloss value | 400% | 300% | 800% | 800% | 800% | - |
| | Gloss retention | 38% | 29% | 76% | 76% | 76% | - |
| | Gloss evaluation | Poor | Poor | Good | Good | Good | - |
| Portion of expansi on rate 150% | 20° gloss value | 250% | 200% | 500% | 500% | 550% | - |
| | Gloss retention | 24% | 19% | 48% | 48% | 52% | - |
| | Gloss evaluation | Poor | Poor | Fair | Fair | Fair | - |

| | | | | | | | |
|---|---|---|---|---|---|---|---|
| * Layer (A-1): thermoplastic resin film layer; Layer (B): decorative layer; and Layer (A -2): supportive substrate resin layer | | | | | | | |

In Examples 1 to 4, the matched mold forming was conducted at relatively low temperatures by using movable frame clamps whereby no wrinkles were generated in the formed products, their reproducibility of the molded shape was excellent, and their metallic luster of the decorative layers could be maintained.

In Example 5, a metallic luster layer was not employed as the decorative layer, but the change of the color pattern was slight, and the formed product having excellent exterior appearance was obtained.

In Comparative Example 1, since the movable frame clamps were used, no wrinkles were generated on the formed product, and the reproducibility of the molded shape was excellent. However, because the forming temperature was relatively higher, the gloss retention was inferior.

In Comparative Example 2, since the vacuum forming was performed without the movable frame clamps and the female mold, wrinkles less than 3 mm were generated on the formed product. Furthermore, the forming temperature optimal for the vacuum forming might be higher, and the expansibility of the sheet seemed non-uniform. Consequently, the gloss retention went inferior.

In Comparative Example 3, since the matched mold forming was performed without movable frame clamps, the loosened sheet could not be sufficiently expanded after heating the sheet, and the sheet could not be prevented from dragging into the molds. Consequently, many wrinkles more than 3 mm were generated. Furthermore, because the expansibility might be non-uniformed due to the above-mentioned reason, the gloss retention on the portion of expansion rate 150% became inferior.

In Comparative Examples 4 and 5, the matched-mold forming was conducted by using movable clamps that were not frame-shaped, and the loosened sheet after heating could be extended to some extent. However, since the effect to prevent dragging of the sheet into molds was insufficient, many wrinkles were generated in the same way as Comparative Example 3. Furthermore, because of the reason described in the Comparative Example 3, the gloss retention on the portion of expansion rate 150% became inferior.

Based on the comparison between Examples 1a to 2a, and Comparative Example 1a to 2a, it was revealed that distortion of the printed pattern could be suppressed by performing the matched mold forming at a relatively low temperature when a decorated sheet having a printed pattern as a decorative layer was used.

Furthermore, the comparison between Example 5 and Comparative Example 6 that did not use the metallic luster layer also resulted in the same.

### Industrial Applicability

The present invention is particularly useful for production of formed articles that are applicable to uses as vehicle members, construction materials, home electronics materials, among others, and that have excellent sharpness of decoration, and the present invention is useful for production of formed articles that do not require external coating. In particular, the present invention is highly applicable as a method of forming a forming laminate sheet having mirror-like metal luster or as a forming apparatus thereof.

## Claims

1. A method of thermoforming a thermoforming sheet by holding between a pair of molds the thermoforming sheet in which at least one or more thermoplastic resin layers (A) and a decorative layer (B) are laminated, said method comprising: thermoplasticizing a portion of the thermoforming sheet, including a part which is molded with molds, at a temperature range of (Tg (A) - 30)°C to (Tg (A) + 10)°C with respect to the glass transition temperature (Tg (A)) of the thermoplastic resin layer (A) where the glass transition temperature (Tg) refers to a temperature where mechanical damping becomes a maximum value when the dynamic viscoelasticity is measured under measurement conditions of: a frequency of 1 Hz; a measurement-starting temperature of 0°C; and an increase in rate of 3°C/minute, and where , when the thermoforming sheet includes a plurality of the thermoplastic resin layers (A), the highest temperature among the glass transition temperatures of the plurality of thermoplastic resin layers (A) is defined as the Tg (A);
subsequently clamping by using a pair of frame clamps both sides of a perimeter around the portion which is molded with the molds;
expanding the thermoplasticized portion between one mold and the frame clamps by pressing a portion of the one mold onto one surface of the thermoplasticized portion;
subsequently bringing the other mold into contact with the thermoplasticized portion from the side opposite to the surface of the thermoplasticized portion that the one mold is in contact with; and
mold-clamping the thermoplasticized portion with the one mold and the other mold to mold the thermoforming sheet.

2. The method of thermoforming a thermoforming sheet according to Claim 1, wherein the one mold is a male mold and the other mold is a female mold.

3. The method of thermoforming a thermoforming sheet according to Claim 1, wherein the one mold is a female mold and the other mold is a male mold.

4. The method of thermoforming a thermoforming sheet according to Claim 2, wherein the inner perimeter of the frame clamp adjacent to the female mold is positioned inside the inner perimeter of the frame clamps adjacent to the male mold, and,
when the thermoplasticized portion is expanded between the one mold and the frame clamps by pressing the portion of the one mold onto the one surface of the thermoplasticized portion, air is vacuum-aspirated from the male mold-side with respect to the thermoplasticized portion while clamping the thermoforming sheet between the inner perimeter of the frame clamp adjacent to the female mold and the outer perimeter of the male mold.

5. The method of thermoforming a thermoforming sheet according to Claim 1, wherein the thermoforming sheet is a laminate sheet in which a transparent or semi-transparent thermoplastic resin layer (A-1), the decorative layer (B), and a thermoplastic resin layer (A-2) that functions as a supportive substrate are layered in order, and the temperature for thermoplasticizing is within a temperature range of (Tg (A-M) - 30)°C to (Tg (A-M) + 10)°C where the Tg (A-M) refers to a higher glass transition temperature among the glass transition temperatures of the layer (A-1) and the layer (A-2).

6. The method of thermoforming a thermoforming sheet according to Claim 1, wherein the decorative layer (B) is a metallic decorative layer that includes an ink film in which metal flakes are dispersed in a biding resin.

7. A forming apparatus for a thermoforming sheet that is an apparatus that molds the sheet by bringing a pair of molds into contact with a part which is molded with molds after thermoplasticizing a portion of the thermoforming sheet, including the part which is molded with molds, at a temperature range of (Tg (A) - 30)°C to (Tg (A) + 10)°C with respect to the glass transition temperature (Tg (A)) of the thermoplastic resin layer (A) where the glass transition temperature (Tg) refers to a temperature where mechanical damping becomes a maximum value when the dynamic viscoelasticity is measured under measurement conditions of: a frequency of 1 Hz; a measurement-starting temperature of 0°C; and an increase in rate of 3°C/minute, and where , when the thermoforming sheet includes a plurality of the thermoplastic resin layers (A), the highest temperature among the glass transition temperatures of the plurality of thermoplastic resin layers (A) is defined as the Tg (A), wherein frame clamps that clamp a perimeter around a portion of the sheet which is molded with the molds are provided around the molds, respectively, and the frame clamps are capable of moving relatively to the molds.

8. The forming apparatus for a thermoforming sheet according to Claim 7, wherein the frame clamps and the molds are supported by common fixing plates.

9. The forming apparatus for a thermoforming sheet according to Claim 7 or 8, wherein the inner perimeter of the frame clamp adjacent to the female mold is positioned inside the inner perimeter of the frame clamps adjacent to the male mold, the frame clamps adjacent to the female mold and the male mold are formed into a structure in which the thermoforming sheet can be clamped between the inner perimeter of the frame clamp adjacent to the female mold and the outer perimeter of the male mold, and the male mold has a vacuum port from which air is vacuum-aspirated at the male mold-side of the thermoforming sheet.

10. The forming apparatus for a thermoforming sheet according to Claim 7 or 8, wherein the frame clamps have a recessed part or a projected part that joint to one another on the surface where the thermoforming sheet is clamped, and the projected part provided in one frame clamp is capable of jointing to the recessed part provided on the other frame clamp when the thermoforming sheet is clamped between both the frame clamps.

11. The forming apparatus for a thermoforming sheet according to Claim 7 or 8, wherein the thermoforming sheet is a laminate sheet in which a transparent or semi-transparent thermoplastic resin layer (A-1), a decorative layer (B), and a thermoplastic resin layer (A-2) that functions as a supportive substrate are layered in order, and the temperature for thermoplasticizing is within a temperature range of (Tg (A-M) - 30)°C to (Tg (A-M) + 10)°C where the Tg (A-M) refers to a higher glass transition temperature among the glass transition temperatures of the layer (A-1) and the layer (A-2).
